(19) **Europäisches Patentamt / European Patent Office / Office européen des brevets**

(11) **EP 1 393 094 B1**

(12) **EUROPEAN PATENT SPECIFICATION**

(45) Date of publication and mention
of the grant of the patent:
**25.01.2017   Bulletin 2017/04**

(51) Int Cl.:
***G01T 1/00*** (2006.01)

(21) Application number: **02732011.8**

(22) Date of filing: **28.05.2002**

(86) International application number:
**PCT/US2002/017400**

(87) International publication number:
**WO 2002/099459 (12.12.2002 Gazette 2002/50)**

(54) **METHOD AND APPARATUS FOR BASELINE CORRECTION IN X-RAY AND NUCLEAR SPECTROSCOPY SYSTEMS**

VERFAHREN UND VORRICHTUNG ZUR GRUNDLINIENKORREKTUR IN RÖNTGEN- UND KERNSPEKTROSKOPIESYSTEMEN

PROCEDE ET APPAREIL DE CORRECTION DE LA LIGNE DE BASE DANS DES SYSTEMES DE SPECTROSCOPIE A RAYONS X ET NUCLEAIRES

(84) Designated Contracting States:
**AT BE CH CY DE DK ES FI FR GB GR IE IT LI LU MC NL PT SE TR**
Designated Extension States:
**AL LT LV MK RO SI**

(30) Priority:  **04.06.2001   US 874405**

(43) Date of publication of application:
**03.03.2004   Bulletin 2004/10**

(73) Proprietor: **Warburton, William K.**
**Menlo Park, CA 94025 (US)**

(72) Inventors:
• **WARBURTON, William, K.**
**Menlo Park, CA 94025 (US)**
• **HARRIS, Jackson, T.**
**Berkeley, CA 94705-2105 (US)**

• **GRUDBERG, Peter, M.**
**Castro Valley, CA 94546 (US)**

(74) Representative: **Boult Wade Tennant**
**Verulam Gardens**
**70 Gray's Inn Road**
**London WC1X 8BT (GB)**

(56) References cited:
| | |
|---|---|
| WO-A1-01/17103 | WO-A1-97/07591 |
| WO-A1-98/50802 | WO-A1-99/58999 |
| US-A- 4 217 496 | US-A- 5 021 664 |
| US-A- 5 225 682 | US-A- 5 347 129 |
| US-A- 5 684 850 | US-A- 5 774 522 |
| US-A- 5 873 054 | US-A- 5 884 234 |
| US-B1- 6 181 177 | |

**Description**

BACKGROUND OF THE INVENTION

The present invention relates generally to systems for detecting, counting and measuring step-like signal events produced by preamplifiers connected to radiation detectors used to detect x-rays, gamma-rays, nuclear particles, and the like. More particularly, it relates to increasing the accuracy with which the amplitudes of these step-like events are measured by increasing the accuracy of determining the event energy filter's baseline output at times when no events are being processed. The described specific embodiment relates to a spectrometer using a solid state detector, but the same techniques apply when other detectors are used as well, since their operating principles are nearly identical.

A Synopsis of Current Spectrometer Art

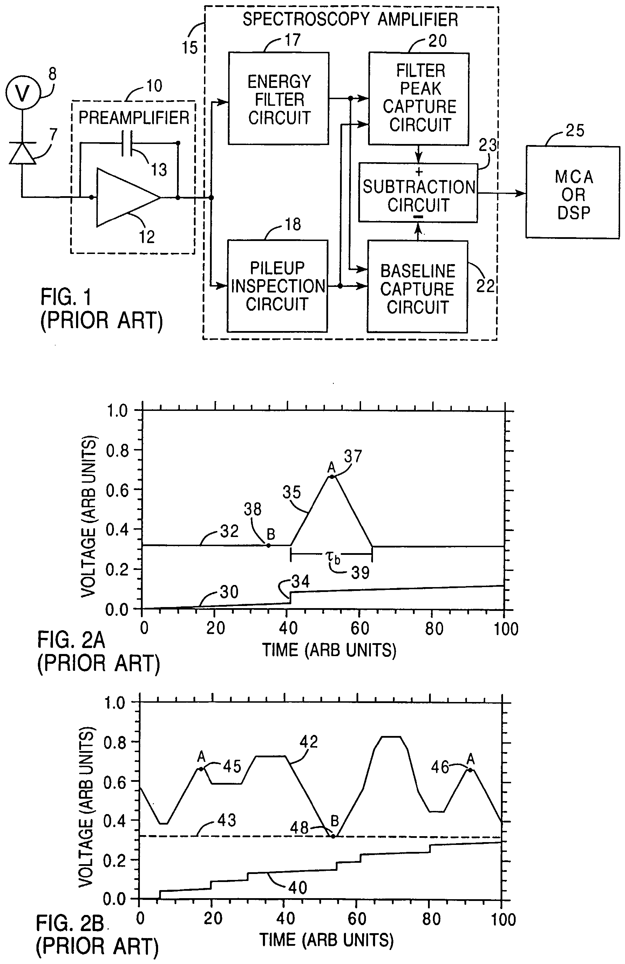

**Fig. 1** is a schematic diagram of a prior art radiation spectroscopy system employing a solid state detector diode **7.** Similar systems are used to measure x-ray, gamma-ray and alpha and beta particle radiations, differing primarily in the physical form of the detector diode **7,** which might also be replaced with a proportional counter or other detector. All of these detectors **7,** when biased by a voltage supply **8,** characteristically produce an output current pulse when detecting an absorption event and the total charge $Q_E$ in this pulse is approximately proportional to the energy E deposited in the event. The current flows into a preamplifier **10** and is integrated onto feedback capacitor **13** of value $C_f$ by an amplifier **12,** whose output is then a step-like pulse of amplitude $A_e = Q_E/C_f$. As a matter of nomenclature, we will sometimes refer to pulses produced by the preamplifier in response to events as "event pulses".
A spectroscopy amplifier **15** then measures $A_E$. Within modern spectroscopy amplifiers **15** the output of preamplifier **10** is typically sent to both a "slow" energy filter circuit **17,** which filters the $A_e$ step to produce a low-noise output pulse whose peak height $A_E$ is proportional to $A_e$, and a "fast" pileup inspection circuit **18,** which applies a filter and discriminator to the preamplifier output to detect the presence of $A_e$ signal steps (events) and signal the filter peak capture circuit **20** to capture the values $A_E$ which are sufficiently separated in time so that they do not pile up. The "fast" and "slow" filter times vary with application, but the "fast" time is typically an order of magnitude shorter than the "slow" time (e.g. 200 ns versus 4 $\mu$s in an x-ray spectrometer). Inspection circuit **18** also determines when the energy filter output has returned to its DC value and signals baseline capture circuit **22** to capture these values for subtraction from captured peak values by a subtraction circuit **23**. These differences are then passed to a multichannel analyzer (MCA) or digital signal processor (DSP) **25,** for binning to form a spectrum of the energies in the incident radiation.
We note that, although the most common spectrometers capture the shaped pulse's amplitude $A_E$ to estimate the energy E, spectrometers exist that measure other shaped pulse characteristics, such as its area, or capture several points on the shaped pulse and then fit a mathematical function to them. As a matter of nomenclature, we shall refer to these various measured values as "characteristics" of the shaped pulse. Because the energy filter is a linear filter, these characteristics are all proportional to one another, although their signal to noise properties may differ, depending on the energy filter and the noise spectrum. Thus, although we primarily refer to the amplitude $A_E$ in the remainder of this specification, since it is the most common characteristic, the reader should remember that it is representative of all the various characteristics and that our invention applies to all of them too.

The Need for Baseline Correction

**Fig. 2A** shows why baseline correction is needed. Trace **30** shows the preamplifier output **10,** with step **34** occurring from an event. Trace **30's** slight slope may physically result from detector leakage current, a non-ideal amplifier **12,** or noise pickup. Trace **32** shows energy filter output **17,** with shaped pulse **35** in response to input step **34.** The full amplitude A **37** of pulse **35** is the sum of its height plus the baseline (DC) offset B **38,** where B is the energy filter circuit's response to the preamplifier signal slope. Thus, in the spectroscopy amplifier **15,** the peak capture circuit **20** captures values A **37** while the baseline capture circuit **22** measures baseline values B **38,** and the subtraction circuit **23** outputs A-B which represents the detector event's energy.
The art of building spectroscopy amplifiers is relatively mature and many variations, using both analog and digital electronics, exist on the basic circuit shown in **Fig. 1.** The reference book by Knoll [KNOLL - 1989] provides a good introduction to the subject. See, for example, Chapter 16, Section III, "Pulse Shaping." In digital spectrometers, for example, multiple baseline samples must be captured and averaged to reduce their variance and this may be carried out in the DSP **25,** which can either carry out the subtraction step as well or return a baseline value to the subtraction circuit **23.** U.S. Patent Nos. 5,684,850, 5,870,051 and 5,873,054 by Warburton et al. [WARBURTON - 1997, 1999A, and 1999B] provide further details on this problem. The basic functions presented in **Fig. 1** capture the essence of the operation of these spectrometers as a class, however, and are sufficient to teach the inventive steps.

The High-Input-Count-Rate Problem

At high count rates, it becomes difficult to obtain an accurate baseline measurement, as shown in **Fig. 2B,** because the output of the energy filter circuit **17** rarely returns to its baseline value, since this requires an inter-event spacing significantly bigger than the output pulse basewidth (i.e., $\tau_b$ **39** in **Fig. 2A).** Comparing $\tau_b$ to the input counting rate (ICR) tells whether the ICR is "high" for a particular energy filter, since, with efficient pileup inspection, $\tau_b$ becomes the energy filter's deadtime $\tau_d$. The spectrometer's output counting rate (OCR) is given by the extending dead time formula [KNOLL - 1989, Chapter 4, Section VII, "Dead Time"]:

$$OCR = ICR \exp(-ICR\ \tau_d), \qquad\qquad (1)$$

whose maximum $OCR_{max} = ICR_{max}/e = (e\ \tau_d)^{-1}$ occurs at $ICR_{max} = \tau_d^{-1} = \tau_o^{-1}$.

"High" ICRs, then, are those that exceed $ICR_{max}$ or $\tau_b^{-1}$. At $ICR_{max}$, most pulses (63%) pileup and only (37%) have valid peak amplitudes. (See **Fig. 2B).** Similarly, opportunities to capture baseline values B **48** also fall off rapidly past $ICR_{max}$.

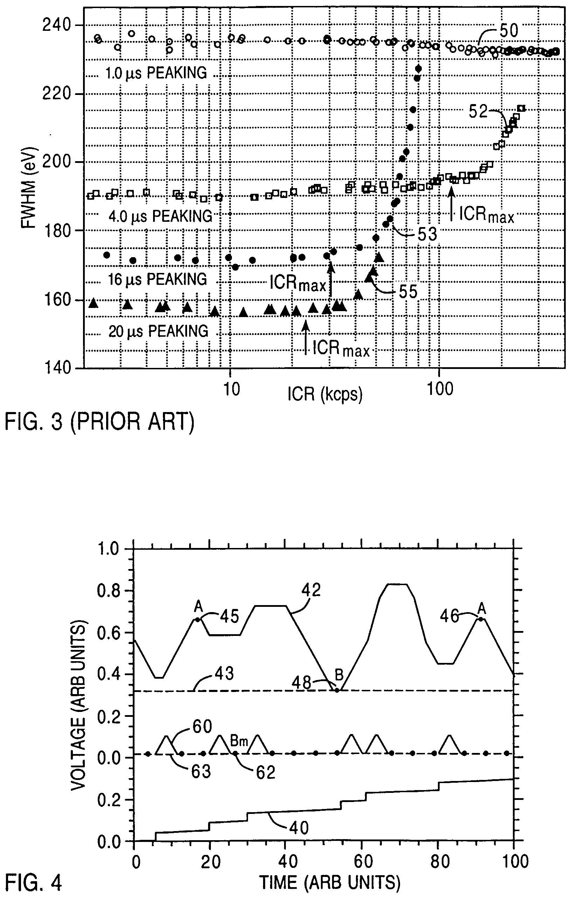

**Fig. 3** shows a practical result. The data were collected using an XIA DXP-4C digital x-ray spectrometer connected to a high quality HPGe x-ray detector exposed to an Fe-55 radiation source at varying distances for four peaking times: 1.0 $\mu$s **50,** 4.0 $\mu$s **52,** 16 $\mu$s **53,** and 20 $\mu$s **55.** In the three cases where $ICR_{max}$ is exceeded, the energy resolution begins to degrade sharply. In this regime baseline samples can no longer be gathered reliably and those that are captured are frequently contaminated with energy from neighboring pulses. The same experiments also showed significant centroid shift at high ICR values since pulse amplitudes are the difference between their maxima and their baselines. While these problems can often be dealt with by limiting either the count rates to which the detector is exposed or the noise environment in which the instrument operates, there are also many cases where neither condition is readily controlled. A method to enhance the "dynamic range" of ICRs over which a spectrometer could function without resolution degradation, even in noisy environments, would therefore be beneficial in a variety of radiation detection applications.

These problems are exacerbated when working with low energy radiation, where event energy approaches the preamplifier's output noise (e. g., x-ray detectors below 1 keV). In these cases the energy filter is also commonly used to detect events, which significantly degrades the circuit's ability either to do accurate pileup inspection or to assure that captured baseline events are free of energy contamination from other very low energy events. A method that enhanced the efficiency of the pileup inspection circuit 18 when dealing with very low energy events would therefore also be beneficial.

OTHER PRIOR ART

WO-A-99/58999 discloses digital pulse de-randomization for radiation spectroscopy. WO-A-01/17103 discloses a method and an apparatus for improving resolution in spectrometers processing output steps from non-ideal signal sources. US-B-5225682 discloses a method and an apparatus for providing pulse pile-up correction in charge quantizing radiation detection systems. US-B-6181177 discloses a baseline correction circuit for PWM data readback systems.

SUMMARY OF THE INVENTION

The present invention provides method and apparatus techniques for increasing the number of baseline samples that can be captured at high input counting rates (ICRs), thereby allowing a radiation spectrometer to work at higher ICRs without substantial energy resolution degradation or shifting of spectral peak features.

In brief, the approach entails providing, in addition to the energy filter, a second filter (the baseline filter), and capturing baseline values from the baseline filter. These captured baseline values are then used to estimate the energy filter's baseline value.

More specifically, the energy filter transforms event pulses into shaped pulses, which are sometimes referred to as energy pulses, and a characteristic A (e. g., peak value, area, etc.) is measured for at least some of the shaped pulses to estimate their associated event energies E. Energy filter baseline values BE are needed to compensate the measured A values for the energy filter's non-zero output when preamplifier output pulses are absent. The present invention contemplates capturing baseline values BB from the baseline filter at times when it is at its own baseline value and using them to estimate the required energy filter baseline values BE In specific embodiments, the energy filter and the baseline filter are linear filters, and BE values are obtained from BB values simply by scaling by a constant.

The capture of BB values is under the control of the same pileup inspection circuit, appropriately modified, that captures values A. As a matter of nomenclature, the baseline filter transforms event pulses into shaped pulses, which are sometimes referred to as baseline pulses.

The baseline filter's basewidth should be shorter than the energy filter's basewidth so that it is at its baseline more often than the energy filter is. In a preferred implementation, both filters are trapezoidal, with the time constants of the baseline filter being one quarter of those of the energy filter, and the resultant scaling constant being 16. By reliably providing baseline samples, this implementation preserves both energy resolution and stable peak centroids even when ICR exceeds $ICR_{max}$ by the same factor of four. Thus the invention recognizes and exploits the fact that the maximum ICR at which a filter operates effectively increases as its peaking (or shaping) time, and hence its basewidth, decreases.

Embodiments can further include one or more enhancements to optimize the invention's performance. First, the baseline filter can be tested to assure that is truly at baseline before capturing values from it. A simple test is to require that the baseline filter output be below a predetermined threshold. However, this method can produce biased results. Thus, in our preferred implementation, we employ the pileup inspector to make a better test: each time a pulse is detected in the fast channel, the pileup inspector measures a baseline filter clearing time. If no following pulse is detected within this interval, then the baseline filter has returned to its baseline value and may be validly sampled.

Second, because the baseline filter's preferable basewidth is significantly shorter than the energy filter's, we average multiple baseline measurements so that subtracting $B_B$ from A does not significantly increase the noise in the resultant E values.

Third, we use a baseline spectrum to eliminate from our baseline average such invalid baseline values as may come from other, rarer forms of pileup or processing errors. We collect all baseline values into this spectrum and, from time to time, determine its width $W_B$ at a preselected fraction of maximum (typically 5%). Then we only include in the baseline average those baseline values that satisfy the cut $|B_B| < W$.

We also present two extensions of the basic invention. In the first, we modify the baseline averaging technique so the samples in the average $<B_B>_i$ subtracted from $A_i$, the $i^{th}$ measurement A, are more or less symmetrically disposed about $A_i$ in time, rather than trailing it, as in the basic implementation. This allow superior baseline tracking in the presence of low frequency noise and is accomplished by placing each $A_i$ value into a circular buffer and subtracting $<B_B>$ from it fixed number of $B_B$ samples later. We show a design that uses DSP memory as a buffer to accomplish this goal.

In the second extension, we enhance performance for processing soft x-rays or other low energy events by augmenting the fast channel pulse detection circuit with an input from a discriminator attached to the baseline filter, whose significantly lower noise allows the discriminator threshold to be set at much lower energies. For x-ray detectors, this allows reliable operation into the sub-kilovolt regime. Since pulse detection and baseline capture can now occur from the same filter, further care is required to assure that $B_B$ values are not contaminated by still-to-be-detected pulses. We therefore buffer each captured $B_B$ value and require that no pulse be detected within a post-collection clearing time before it is included in the baseline average. Similarly, additional care is required to minimize soft energy pileups. We show two pileup inspection improvements: a pulse-width cut based on pulse amplitude and a comparison of peak amplitudes between the baseline and energy filters. We show that the method allows clean operation down to the boron K x-ray line at 185 eV.

A further understanding of the nature and advantages of the present invention may be realized by reference to the remaining portions of the specification and the drawings.

BRIEF DESCRIPTION OF THE DRAWINGS

**Fig. 1** is a schematic diagram of a prior art radiation spectrometer;
**Fig. 2A** shows the outputs of the preamplifier and filter circuits in **Fig. 1** in response to a single detection event;
**Fig. 2B** repeats **Fig. 2A** under the conditions of a high input event rate;
**Fig. 3** shows curves of energy resolution versus ICR for four different peaking times for an x-ray spectrometer of the type represented in **Fig. 1;**
**Fig. 4** repeats **Fig. 2B** with an added filter of significantly shorter basewidth;
**Fig. 5** is a sketch showing the relationship between a trapezoidal filter's filter parameters and its baseline output;
**Fig. 6** is a schematic drawing of a digital spectrometer implementation of the subject invention containing both an energy filter and a baseline filter;
**Fig. 7** is a plot of the total noise and baseline noise resolutions versus peaking time for the circuit implemented according to **Fig. 6;**
**Fig. 8** repeats **Fig. 3** showing the improvement obtained by using the subject invention as represented by **Fig. 6;**
**Fig. 9** is a sketch comparing errors between symmetric and trailing baseline running averages when the baseline is time varying;
**Figs. 10** is a schematic representation of one method for storing data in a circular buffer as a means for implementing a time symmetric baseline running average;

**Fig. 11** repeats the digital spectrometer schematic drawing of Fig. 6, where the baseline filter circuit additionally provides an input to the pileup inspection circuit;

**Fig. 12** is a sketch showing the need for both pre- and post- baseline sample inspection periods for soft x-ray work;

**Fig. 13** is an x-ray spectrum of a carbon coated boron sample taken using a high resolution HPGe SEM x-ray detector and the circuit of **Fig. 11.**

**Fig. 14** is a plot of preamplifier, baseline filter and energy filter signals for a pair of closely piled-up pulses showing a case where the MAXWIDTH test fails;

**Fig. 15** repeats the digital spectrometer schematic drawing of **Fig. 11** with the addition of an energy comparison circuit for improved soft x-ray pileup inspection;

**Fig. 16** repeats the digital spectrometer schematic drawing of **Fig. 15** with the energy and baseline filter offset subtraction moved out of the DSP and into the digital processing circuit;

**Fig. 17** is a schematic drawing of an analog spectrometer implementation of the subject invention; and

**Fig. 18** repeats the preamplifier and filter circuit outputs of **Fig. 4** with the addition of three gate signals used to control the operation of the spectrometer shown in **Fig. 17.**

DESCRIPTION OF SPECIFIC EMBODIMENTS

1. Introduction

The invention's technique for baseline correction requires an understanding of how radiation absorption events arriving randomly in a detector interact with a spectroscopy filter that outputs shaped pulses having a basewidth $\tau_b$. **Eqn. 1,** above, gives output counting rate (OCR) versus input counting rate (ICR) for a filter having a deadtime $\tau_d$. OCR increases to a maximum at $ICR_{max} = 1/\tau_d$, and then falls off. The spectrometer's pileup inspection circuit causes the "dead" time $\tau_d$ to be the sum of two inspection times ($t_{ip}$ preceding the event and $t_{if}$ following the event) during which no second event can occur. Thus **Eqn. 1** reflects the "pileup-free" probability that no pulse occur within a time period of length $\tau_d = t_{ip} + t_{if}$ located about the event.

The value of $\tau_d$ is closely related to the shaped pulse's basewidth $\tau_b$. First, $\tau_b$ is the time the shaped pulse has a non-zero value. Second, $\tau_b$ is composed of two terms, the pulse risetime $t_r$ (from zero to peak) and the pulse fall time $t_f$ (from peak back to zero). Now, for a pulse not to pileup with its neighbors, $t_{ip}$ and $t_{if}$ must satisfy:

$$t_{ip} \geq t_f \qquad\qquad (2A)$$

$$t_{if} \geq t_r \qquad\qquad (2B)$$

so that

$$\tau_d = t_{ip} + t_{if} \geq t_r + t_f = \tau_b. \qquad\qquad (2C)$$

Thus, $\tau_b$ is the minimum possible deadtime achievable with perfect pileup inspection. We note that simple, algebraic relationships may or may not exist between $\tau_d$, $\tau_b$ and the parameters characterizing the filter. Further, although "basewidth" is primarily a characteristic of a shaped pulse, we will also regularly refer to the "basewidth" of the filter that produces it as a shorthand notation for the "basewidth of the pulses output by this filter". We also understand that real filters, presented with real inputs, will output pulses of varying basewidths, typically on a pulse-by-pulse basis. The two inspection times $t_{ip}$ and $t_{if}$ will thus have be adjusted to exceed the longest rising and falling times expected to occur, but these values will scale with the underlying filter basewidth.

The Poisson nature of randomly arriving pulses is such that $\tau_b$ is also a good measure of how often good $B_B$ values can be captured at a given ICR. In fact, the rate of valid baselines occurring is also **Eqn. 1,** since, from **Figs. 2A** and **2B,** the filter output can only return to baseline if two successive events are separated by more than a pulse basewidth.

From Poisson statistics, the chance of an interval of length $\tau_d$ occurring following an event without a second event arriving is also exp(-ICR $\tau_d$). Therefore, the rate at which baseline values BE can be obtained from the energy filter falls after $ICR_{max}$ is reached, per **Eqn. 1,** causing increasingly poor estimates B as ICR increases. When B is an average of many BE values, the time to form the average increases accordingly. For example, a 32 $\mu$s peaking time

filter ($\tau_d$ = 64 $\mu$s) operating at $ICR_{max}$ of 15625 cps will produce one good baseline event, on average, every 0.174 ms. A $<B_E>$ average of 32 such values will then take 5.57 ms to acquire (which is the period of 180 Hz) and will therefore be unable to track line frequency noise at the common third harmonic of 60 Hz. Analog baseline sampling schemes suffer from similar problems, as is known to those proficient in the art.

The invention addresses these issues by using a separate baseline filter with a shorter basewidth to obtain $B_B$ values and thus can continue to capture them to much higher ICR values than BE values from the energy filter. This ability easily compensates for the larger number of samples needed in $<B_B>$ to achieve comparable noise performance. **Fig. 4,** repeats the preamplifier and energy filter traces **(40** and **42)** from **Fig. 2B,** adding a trace **60** from a trapezoidal baseline filter whose peaking, gap, and basewidth times are one quarter of those of the energy filter. Clearly, because its basewidth is much narrower than the energy filter's, there are many more opportunities (represented by the dots **62)** to obtain independent baseline samples that are separated from one another by at least a basewidth.

Traces **42** and **60** are plotted on the same vertical scale, which immediately shows an issue which must be properly handled: the baselines of the two filters **(43** and **63)** are not equal, the former being about 0.32 and the latter about 0.02. $B_B$ values require scaling in order to properly estimate the energy filter's baseline value B.

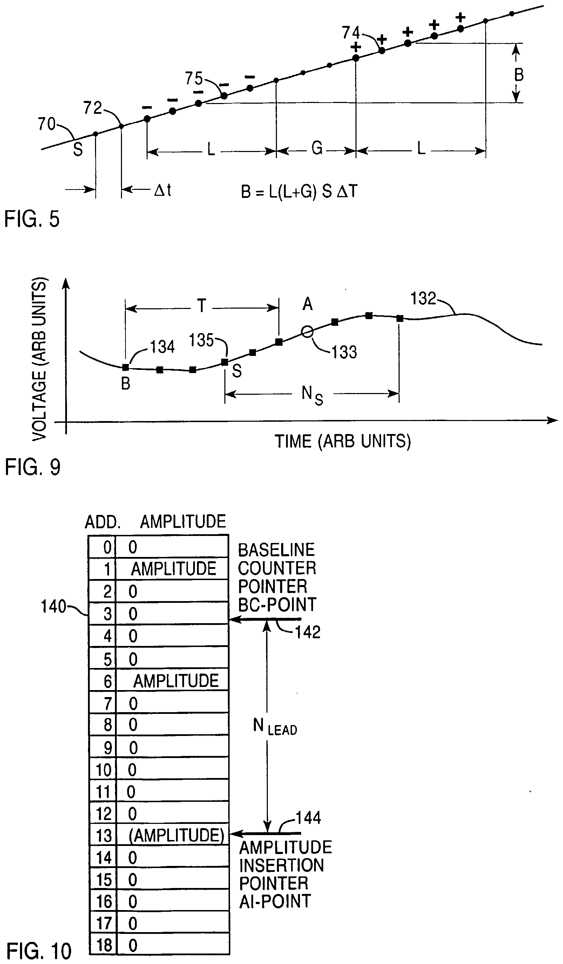

This behavior, which is characteristic of the invention, is readily dealt with since all of the filters are characteristically linear filters. **Fig. 5** illustrates our method, showing a section of preamplifier signal of slope S **70** that is free of event signals and has been digitized at regular intervals (i.e. the dots **72).** Superimposed on the dots we show the instantaneous position of a digital trapezoidal filter having risetime L and gap G. This filter is an averaged difference filter, being the difference between a positive running sum (the enhanced dots marked with +'s **74)** and a negative running sum (the enhanced dots marked with -'s **75).** Per the equation in **Fig. 5,** this filter's baseline output B is given by

$$B = L\ (L+G)\ S\ \Delta t, \tag{3}$$

where $\Delta t$ is the time between samples. **Eqn. 3** allows us to simply relate the baseline filter value $B_B$ to the energy filter value BE in our preferred implementations, where both filters are trapezoidal. Thus, if $\tau_{pb} = L_B\ \Delta t$ and $\tau_{gB} = G_B\ \Delta t$ are the baseline filter peaking time and gap time, with the energy filter terms $\tau_{pE}$ and $\tau_{gB}$ defined equivalently, then the scaling relationship between $B_E$ and $B_B$ is:

$$B_E = B_B\ (\tau_{pE}(\tau_{pE}+\tau_{gE}))/(\tau_{pB}(\tau_{pB}+\tau_{gB})) =$$

$$B_B(L_E(L_E+G_E))/(L_B(L_B+G_B)) = K_{EB}\ B_B. \tag{4}$$

This shows that the two baselines are linearly proportional to each other, as they should be, since the filters are linear filters, and that the proportionality constant is a ratio of constants describing the filters' properties.

This proportionality is general, in fact, and holds independent of the shape of the particular filters used or whether they are digital or analog filters. For any linear filter i, an equation similar to **Eqn. 3** can be written:

$$B_i = K_i\ S\ \Delta t. \tag{5}$$

Then, as long as both the baseline filter B and energy filter E are linear, **Eqn. 4** generalizes to

$$B_E = B_B\ K_E/K_B = K_{EB}\ B_B \tag{6}$$

as before. As a simple example, if the energy filter is trapezoidal and the baseline filter triangular, then the **Eqn. 6** relationship between them can be found from **Eqn. 4** by setting $G_B$ to zero. **Eqn. 6** is important to understanding the present invention because it shows explicitly that the baseline and energy filters can have different functional forms and, so long as both are linear filters, we can use scaled $B_B$ measurements to determine $B_E$. In cases where it is difficult to analytically derive **Eqns. 5** and **6,** the filter output ratios can be measured under controlled conditions to obtain $K_{EB}$.

In our preferred implementations, we choose filters having the same functional form with parameters differing by powers of two, since this greatly simplifies their digital manipulation in our combinatorial digital signal processors. As **Eqn. 6** shows, this is simply a matter of convenience, and no such restrictions need be observed either when other modes of digital processing are employed or for analog processing,. In **Fig. 4,** the baseline filter was exactly one quarter as long as the energy filter, so that $L_E/L_B = G_E/G_B = 4$. So, from **Eqn. 4,** $B_E B_B = 16$, as is seen in **Fig. 4,** where $B_E B_B$

=0.32/0.02 = 16.0.

## 2. A First Implementation with Simple Sampling

### 2.1. Circuit Description

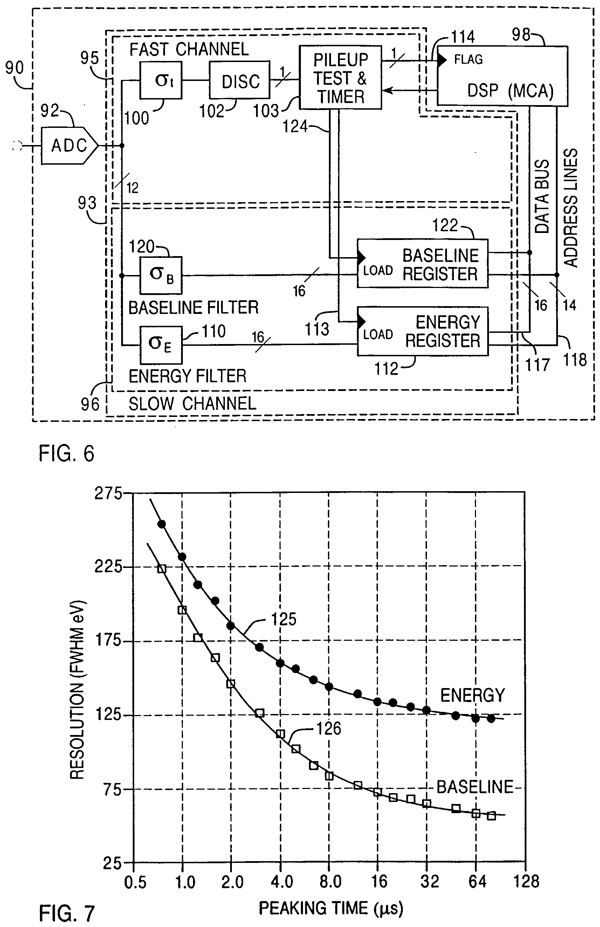

**Fig. 6** shows a first preferred implementation that works well when only energetic events are present (i.e. events that reliably trigger the fast channel discriminator in the pileup inspection circuit **18** in **Fig. 1).** In the **Fig. 6** implementation, the spectroscopy amplifier **15** is implemented as digital circuit **90,** comprising ADC **92** that feeds into a digital processing circuit **93,** whose output feeds into a DSP **98.** Processing circuit **93** comprises fast channel **95** and slow channel **96** and is implemented using combinatorial logic in a field programmable gate array. Operation is substantially as described in [WARBURTON - 1999B]: fast channel **95** implements pileup inspection circuit **18** using a short shaping time circuit **100,** a discriminator **102** and a pileup test and timer circuit **103;** while slow channel **96** comprises a trapezoidal energy filter **110** and a register **112** for capturing peak values from the energy filter; pileup timer **103** detects pulses, starts a countdown timer, and signals energy register **112** via load line **113** to capture peak values from the energy filter **110** when they are not piled-up; following an energy filter capture, the pileup tester **103** raises a flag line **114** to the DSP **98,** which then reads the value in the energy register **112** via the data bus **117** after selecting it using address bus **118.**

The invention baseline capture circuit operates similarly to the energy capture circuit. A baseline filter **120** is connected to a baseline register **122,** which is controlled by the pileup tester **103** via load line **124.** The pileup timer **103** detects pulses, starts a baseline countdown timer, and signals baseline register **122** via load line **124** to capture baseline values from the baseline filter **120** when the countdown timer times out. To control baseline capture, the countdown time BASETIME1 is defined equal to twice the baseline filter's peaking time plus its gap time. This is the soonest instant following the pulse when the baseline filter will have returned to its baseline value following the pulse and so may be validly sampled to capture a baseline value. If another pulse event is detected within the BASETIME1 interval, collection is aborted and the countdown timer restarted. Provided no events intervene, successive baseline values are captured by restarting the BASETIME1 counter and loading baseline register **122** via load line **124** each additional time it times out without a further pulse being detected. These successive uses of BASETIME1 assure that successive baseline samples are uncorrelated measurements of the preamplifier output signal, in the sense that they contain no common data points.

At low ICRs, using BASETIME1 as a minimum interval between captured baseline samples can introduce a time correlation at the frequency 1/ BASETIME1 between successive samples, since they will all tend to fall at this interval. We can destroy this correlation by adding a small random number, uniformly distributed between 0 and BASETIME1/2 to the BASETIME1 test. Rather than building a random number generator using the logic in our gate array, we just use an appropriate number of least significant bits from the ADC for this purpose.

At high ICRs, the BASETIME1 counter method is superior to the common approach of testing a filter's output against a threshold to see if it is at baseline because it produces unbiased results, whereas the threshold test captures values biased toward the threshold. Therefore the randomized BASETIME1 counter method is a preferred implementation.

The DSP **98** reads captured baseline values from baseline register **122** over data bus **117** after selecting it using address bus **118.** In this implementation, DSP **98** runs a control loop as a background task that reads and averages baseline values, looking for a new value whenever it is not engaged in other processing. Because, the DSP can read the baseline register several times per microsecond, one bit in the baseline register is used as a read flag, being set when the value is captured and cleared when it is read. The DSP then tests this bit to assure that each baseline value is only included once in the baseline average.

### 2.2. Baseline Averaging

In preferred implementations we average successive scaled values from the baseline filter to reduce baseline average noise, as taught by [WARBURTON - 1997], using the exponentially decaying, infinite response function:

$$<b>_i = B_i/N + <b>_{i-1} (N-1)/N, \qquad (7)$$

where $B_i$ is the $i^{th}$ scaled baseline sample, $<b>_i$ is the $i^{th}$ baseline average and $N_B$ is an integer that controls the length of the average. Depending upon where the baseline and energy filters fall on the curve of resolution versus peaking time, $N_B$ may be essentially unchanged from the value $N_E$ used for energy filter baseline averaging or it may need to be substantially larger.

**Fig. 7** plots energy resolution $\Delta E$ versus peaking time $\tau_p$ from the energy filter **110** of our preferred implementation circuit shown in **Fig. 6,** when connected to a common commercial HPGe x-ray detector and configured to run in the prior art mode represented by **Fig. 1.** The "energy" curve **125** shows $\Delta E$ versus $\tau_p$ for Mn $K_\alpha$ x-rays at low ICR from the energy filter **110.** The "baseline" curve **126** shows the noise in baseline samples captured from the same energy filter. But this is the same noise that will be found in samples captured by the baseline filter **120** in spectrometer **Fig. 6** when it has the same peaking time $\tau_p$. Clearly, when the baseline peaking time is very long, its noise will be approximately the same as the energy filter's and $N_B$ and $N_E$ could be approximately equal. For short peaking times, where noise goes as $\tau_p^{-1/2}$, $N_B$ will have to be about 4 times $N_E$ since noise reduces as the square root of number of samples. For example, if $\tau_{pB}$ = 1 $\mu$s = $\tau_{pE}/4$, then its 196 eV noise is 1.75 times the energy filter's 126 eV noise at 4 $\mu$s. In this case, $N_B$ will have to be 3.06 times $N_E$ to achieve the same noise performance. Yet, when $\tau_{pB}$ 16 $\mu$s (64 $\mu$s energy filter) their respective noises are 72.4 and 58.0 eV, requiring $N_B/N_E$ to be only 1.6. Our method, therefore, becomes particularly advantageous when long peaking times are employed to obtain the highest energy resolutions, because the penalty $N_B/N_E$ that must be paid for using a shorter baseline filter is least in this regime.

## 2.3. Baseline Cut

In spite of our several tests, erroneous baseline values are occasionally captured from occasional glitches in the preamplifier output signal. They can differ from true values by many standard deviations, and, if included in the baseline average, disrupt it for hundreds of baseline samples. We therefore apply a further cut to exclude such values from our baseline average First, we place all captured baseline values into a baseline spectrum. Second, from time to time, we compute the spectrum's centroid and standard deviation $\sigma$. Third, we set a cut deviation, which is some multiple C of $\sigma$ (e.g. $3\sigma$, which is 5% of peak). Fourth, we compare each captured baseline to see if it lies within $C\sigma$ of the centroid. If it does, it is included in the baseline average. If not, it is discarded. An important point is that every baseline sample is included in the baseline spectrum, even if it is excluded from the baseline average. Thus, for example, if the baseline distribution is not stable in time, the centroid estimate will still be reliably updated to track it. How often the centroid estimate needs to be updated depends on spectrometer stability. Typical values are from 1,000 to 10,000 baseline captures.

## 2.4. Order of Operations

We have now identified several operations that are performed to obtain the final, baseline corrected energy: capturing $B_B$ values, scaling these values to BE per **Eqn. 4,** performing averages $<E_E>$ to reduce noise, capturing values A from the energy filter, and subtracting the $<E_E>$ from A to obtain baseline corrected energy values. The order in which these operations is carried out, however, is somewhat arbitrary, and depends in part on what division of labor is desired between the digital processing circuit **93** and the DSP **98.** For example, the baseline scaling can be carried out before the baseline values are captured (by scaling in the digital processing circuit **93),** before the captured values are averaged, or before the average is subtracted from the captured energy filter peak values. Similarly, subtracting the baseline average from the energy filter can occur either before peak values are captured or before they are read by the DSP. In fact, all operations are amenable to implementation within circuit **93** using only combinatorial logic and this is the preferred implementation when the highest throughput is desired. The various order of operations presented in the descriptions of specific preferred implementations should not be taken, therefore, as limiting the scope of the invention.

## 2.5. Performance Description

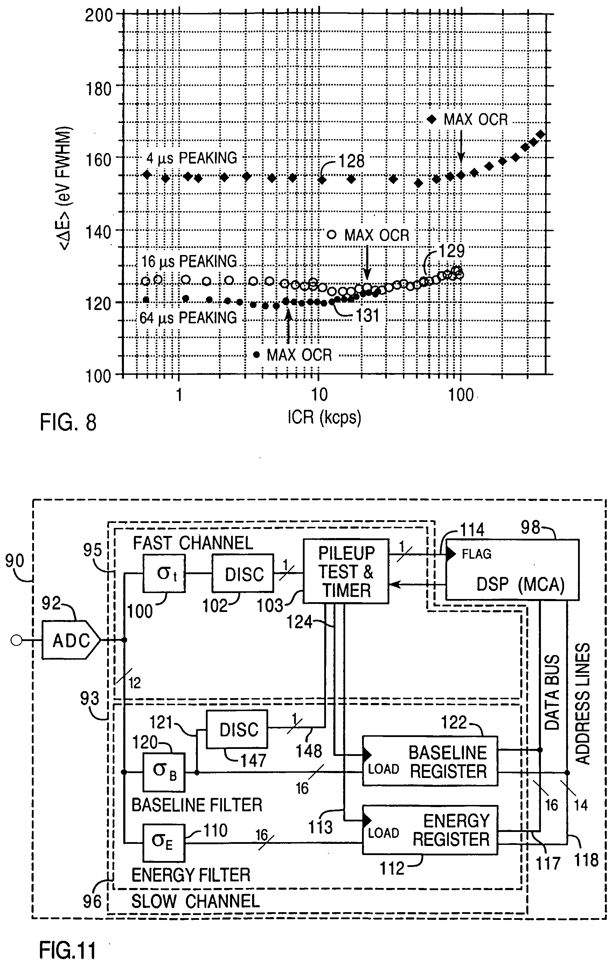

**Fig. 8** repeats **Fig. 3,** but with data collected for peaking times of 4.0 $\mu$s **128,** 16 $\mu$s **129,** and 64 $\mu$s **131** using the preferred implementation of **Fig. 6.** The extension in ICR range without $\Delta E$ degradation is striking. Whereas, in **Fig. 3,** $\Delta E$ degradation become significant for ICR > 2 $ICR_{max}$, and diverged by 3 $ICR_{max}$, in the preferred implementation circuit, ICRs can exceed 3 $ICR_{max}$ before barely noticeable $\Delta E$ degradation occurs and usually reach 4 times $ICR_{max}$ without significant degradation occurring. Thus, at both 64 $\mu$s and 16 $\mu$s, less than 5 eV increase in $\Delta E$ occurs by 4 $ICR_{max}$, while at 4 $\mu$s, the increase is 10 eV (7%), but divergence has not yet occurred. Over the same ICR range the centroids of the Mn $K_\alpha$ energy peaks are stable in the 64 $\mu$s and 4 $\mu$s peaking time cases to better than 0.02%, while the 16 $\mu$s data are stable to better than 0.1%.

## 2.6. Other Implementations

The preferred implementation of **Fig. 6** uses technology described in the referenced patents and augments that work by separating the energy and baseline filtering functions, which is then implemented by the addition of the specific baseline filter **120,** baseline register **122,** baseline test logic in the pileup test and timer **103,** and the described modifications of the baseline averaging code running in the DSP **98.**

There is nothing about the present invention, however, that requires it to be implemented using the described technology. Capturing samples from a baseline filter is no different, *per se* than capturing samples from an energy filter. Therefore the invention can readily be implemented using any of many digital and analog filter capture and inspection techniques found in modern pileup inspected spectrometers. We describe an analog implementation in **§5** below.

2.7. Choice of Baseline Filter

Once the principle of the invention is understood, the question naturally arises, "Why add an additional filter? Why not just use the pileup filter as the baseline filter?" The answer to this question depends primarily on three implementation issues.

The first is scaling simplicity. Particularly in the digital case, having the energy and baseline filter parameters differ by a power of 2 allows the correction to be carried out in the gate array rather than in the DSP, significantly enhancing throughput. The second is baseline sample quality. With a separate baseline filter, the pileup filter can be used to reliably determine when the baseline filter is at its baseline, which keeps the quality of the baseline samples high. As we show in **§4.1** below, additional tests are required when the baseline filter is also used for pileup inspection and so require significantly more resources than having a separate pileup inspection filter while still producing lower quality results. The third is the number of samples required to reduce baseline noise, as noted in **§2.2** above. Capturing and averaging a large number of baseline samples for a short pileup filter consumes both DSP and gate array resources and could significantly reduce throughput.

Taken together, we arrive at the preferred implementation, where $\tau_{pB}$ is $\tau_{pE}/4$. Scaling is easy, we can use the pileup filter to assure baseline quality, and not too many samples are required to achieve low noise. Of course, in those cases when $\tau_{pE}$ becomes so short that $\tau_{pE}/4$ approaches $\tau_{pp}$ of the pileup filter, using the pileup filter as the baseline filter can become the preferred or, sometimes, the only viable solution.

3. Implementing a Time Symmetric Baseline Running Average

3.1. Description of the issues

Both the averaged baseline of **Eqn. 7** and the traditional analog sample-and-hold baseline capture are time lagging baselines, using values captured at times prior to the A value they are used to correct. The longer that time lag, the more likely it becomes that intervening noise or drift will cause the baseline to differ from its "true" value at the time A is captured. **Fig. 9** shows the situation. A drifting baseline signal, represented by the solid curve **132** is sampled at several sequential points (the square dots). We want to estimate its value at point A **133** to give an accurate energy measurement. Assuming that six baseline values must be averaged, in the traditional approach, these would start at point B **134** and form a lagging average over the time T. This average deviates significantly from the desired value at point A. This deviation can be reduced by capturing six points starting at point S **135** to form a symmetric average about A. While its value also differs from the instantaneous baseline value at A, it will give a closer set of values, on average, than will the time lagging method. In the following sections we present one of many possible methods for implementing a time symmetric baseline average.

3.2. Peaks-Buffered-in-Memory Implementation

Our preferred approach to forming time symmetric baseline averages using the preferred implementation shown in **Fig. 6** requires only some DSP **98** memory and a simple bookkeeping program. **Fig. 10** shows a representation of this memory **140,** where the first column shows memory addresses and the second column their values, which are initially zeroed. We create two pointers to the memory: a baseline counter pointer BC-POINT **142** (initially zero), and an amplitude insertion pointer AI-POINT **144** (initially $N_{LEAD}$). The memory is implemented as a cyclical buffer of dimension $BC_{max}$, so both pointers roll over to zero whenever they reach $BC_{max}$ (i.e. all pointer arithmetic is modulo $BC_{max}$). $BC_{max}$ must exceed $N_{LEAD}$, but is otherwise unconstrained.

The bookkeeping program comprises two procedures, amplitude insertion and amplitude comparison. Amplitude insertion is executed each time the DSP reads a value A from energy register **113** and has two steps. First, the DSP computes AI-POINT = BC-POINT+$N_{LEAD}$. Second, the DSP stores the A value at the location AI-POINT **144.**

Baseline comparison is executed each time the DSP reads a valid value from the baseline register **122** and computes an updated $<B_E>$, and has the following steps. First, the value at location BC-POINT **142** is compared to zero. If it is non-zero, then it is a stored A value: $<B_E>$ is subtracted from it and the event energy is calculated in the same manner as in the time trailing baseline case. The value at BC-POINT is then zeroed. Finally, regardless of the result of the initial zero test, the value zero is stored at BC-POINT and BC-POINT is incremented by 1. This method thus works by buffering captured A values until the baseline average has been updated enough times (i.e., $N_{LEAD}$) to become time symmetrical about it. This method can be implemented circuit **Fig. 6** using only software changes in the DSP **98** and some of its memory for the buffer. No hardware changes are required. Obviously the method could be implemented in many different ways, either in hardware or software. For example, since AI-POINT's only used value is BC-POINT + $N_{LEAD}$, the method could easily be implemented using just the single pointer BC-POINT.

$N_{LEAD}$ sets the amount by which the baseline averaging period overlaps the A capture location. When the baseline average is a simple running average, $N_{LEAD}$ would typically be one half the averaging length (e.g. in **Fig. 9,** $N_{LEAD}$ = 3). However, when the baseline average is computed per **Eqn. 7,** $N_{LEAD}$ is typically chosen so that the sum of the weights of the first $N_{LEAD}$ baseline samples equals the sum of the weights of all the remaining samples. As the weight of the $j^{th}$ baseline sample, counting backwards, is

$$w_j = ((N-1)/N)^j/N, \qquad\qquad (8)$$

$N_{LEAD}$ will be given by:

$$N_{LEAD} = \ln(2)/(\ln(N) - \ln(N-1)) \cong (N-1/2)\ln(2), \qquad\qquad (9)$$

where In is the natural logarithm. For example, if N equals 32, $N_{LEAD}$ equals 22.

Finally, to assure that stored A values are not overwritten before they can be processed, we modify the DSP code to always capture at least one valid baseline value for each captured A value. Because we typically set $\tau_{pB}$ to $\tau_{pE}/4$ and two events must be separated by at least $\tau_{pE}$ not to be piled up, the existence of at least one valid baseline between them is always guaranteed. The simplicity of this approach is one reason that it is particularly advantageous when used in conjunction with the present invention.

### 3.3. Beneficial Applications of Time Symmetric Baselines

The benefit added by time symmetric baselines depends strongly on the spectrometer's baseline characteristics. In systems where the baseline is stable and uncontaminated by low frequency noise, little improvement in energy resolution is obtained. However, the method can produce a significant improvement in energy resolution in systems where the power line frequency and its harmonics contribute to baseline noise and also in low frequency current feedback stabilized systems. In this approach, which is presently common in silicon drift detectors, the baseline is constantly fluctuating in response to statistical fluctuations in the photon arrival rate at the detector. In this situation, the present time symmetric baseline method produces superior results, particularly at higher data rates when conventional baseline sampling methods start to break down, as described above.

### 4. Using the Baseline Filter with Very Soft X-Rays

### 4.1. Using the Baseline Filter for Pileup Inspection

In the specific embodiment shown in **Fig. 6** we use digital filters with three different peaking times (and hence basewidths): a long peaking time energy filter, a medium peaking time baseline filter, and a very short pulse detection or trigger filter. The latter's peaking time of between 100 and 200 ns means that its noise level is high and it cannot detect x-rays having energies below about 1000 eV from a typical Si(Li) x-ray detector. This precludes many applications, such as elemental analysis in scanning electron microscopes, where x-rays down to $B_K$ at 185 eV or $C_K$ at 280 eV are to be detected. The energy filter is then conventionally used for pulse detection, but this loses all ability to detect pileups. However, as noted in **§2.2,** the new baseline filter's $\Delta E$ at long peaking times is often quite comparable to the energy filter's $\Delta E$, even though its $\tau_p$ is **4** times shorter. In this case it is extremely beneficial to use the baseline filter as a trigger filter, either to replace or augment the standard fast trigger filter. As an example: suppose we use a 16 $\mu$s baseline filter with a 64 $\mu$s energy filter. From **Fig. 7** the baseline filter's $\Delta E$ is 72 eV, which is only 19 eV worse than the energy filter's 53 eV noise, and easily good enough to work with 185 eV $B_K$ x-rays using a 150 eV trigger threshold.

**Fig. 11** shows our preferred implementation of **Fig. 6** modified to use the baseline filter **120** in conjunction with the pileup test and timer logic **103.** We need only add a second discriminator **147** to the baseline filter's output and connect it to the pileup test and timer **103.** As needed, this input can: a) be ignored (classic mode); b) completely replace the input from the fast channel discriminator **102** (soft x-ray mode); or c) be OR'ed with the input from the fast channel discriminator **102** (mixed x-ray mode). The OR'ed configuration is most useful when a large fraction of higher energy x-rays are present because the fast channel has better time resolution and pileup rejection for these x-rays. When primarily soft x-rays are present, soft x-ray mode greatly improves pileup rejection over classic mode. For example, at 3900 cps (50% of $ICR_{max}$) 1530 cps pileup in a 64 $\mu$s peaking time filter whereas only 460 cps pileup in a 16$\mu$s filter. Thus, soft x-ray mode can reduce pileup into the spectrum by almost 70%.

4.2. Threshold Adjustments for Time Varying Baselines

The threshold set in the baseline discriminator **147** may need to be time dependent if the baseline is changing significantly in time. That is, since we want to trigger on filter excursion above baseline, the baseline threshold value must include the baseline value and, if the latter is changing, change with it. This is most often the case in digital spectrometers of the type described by Warburton and Hubbard [WARBURTON - 1997, 1999A] where a time-varying ramp signal is subtracted from the output of a reset-type preamplifier in order to reduce the dynamic range requirement for the system ADC. This subtraction adds an effective slope to the signal and thus creates an artificial baseline component which is rate dependent. Since, as seen above, the dependence of the baseline value on slope scales with the filter's time constant, this effect will be much larger in the baseline filter than in the fast channel filter since their time constants differ greatly (e.g., 16 $\mu$s compared to 200 ns). In the presence of a slope generator, we therefore divide the baseline into two terms: $B_S$ and $B_R$, which are the slope generator and residual terms, respectively. The baseline threshold value $T_B$ is then set according to:

$$T_B = \Delta + B_S + B_R, \qquad\qquad (10)$$

where $B_S$ is computed by the DSP each time it adjusts the slope generator, and $B_R$ is a value of the baseline average <b> which is updated from time to time. In this case, the baseline average is computed using **Eqn. 7** where the captured values $B_i$ have $B_S$ subtracted before they are used to update <b>$_i$. In many implementations this offset subtraction can be carried out directly using combinatorial logic so that the DSP only has to deal with values of $B_i - B_S$. We will show such an implementation below.

4.3. Assuring Uncontaminated Baseline Values

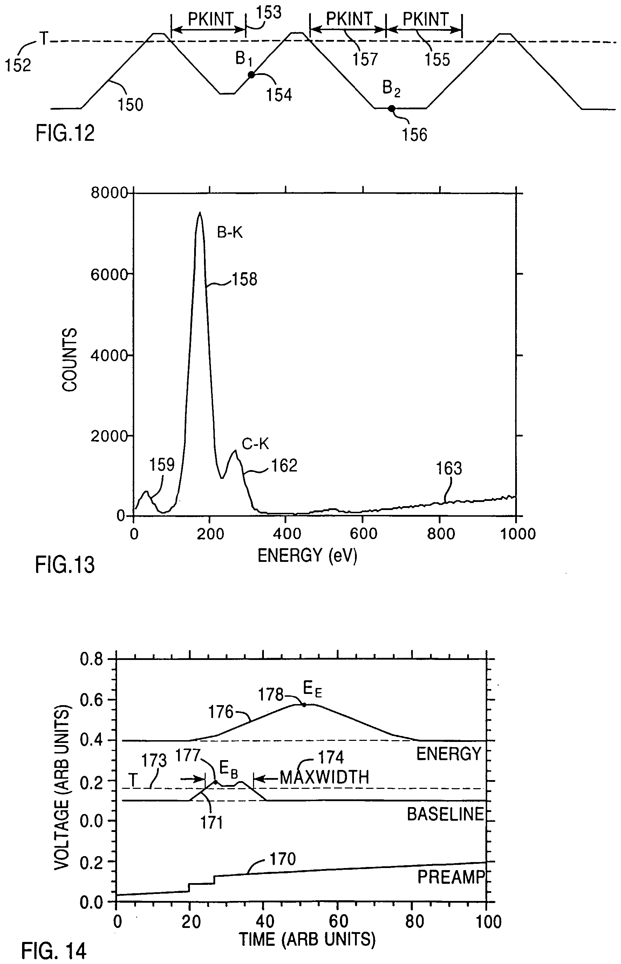

When the baseline filter is used for pileup inspection, additional care must be taken to assure that values captured from the filter for inclusion in the baseline running average do not become contaminated with energy from as yet unrecognized soft x-ray events. Fig. 12 illustrates the problem, showing a baseline filter trace **150** including three relatively closely spaced peaks which barely cross the trigger threshold T **152**. As specified above, starting from the first pulse, we wait a pre-capture inspection period PKINT **153** after a downward threshold crossing before we capture a baseline value $B_1$ **154**. However, as shown, if another soft x-ray happens to come along, but has not yet been detected by its threshold crossing, then $B_1$ may not truly lie at baseline. We solve this problem by implementing an additional post-capture inspection period **155,** declaring the captured baseline $B_2$ **156** to be valid only if no additional threshold crossing occurs before this inspection period expires. The pre-capture PKINT inspection **157** then assures that the previous peak has returned to baseline, while the post-capture PKINT inspection **155** assures that it has not been contaminated by a yet-to-arrive peak. For convenience of implementation, we have made the two inspection periods identical, which works because our trapezoidal filter is time symmetrical. In the case of a more general filter, different inspection periods PKINT1 and PKINT2 would be used. Also more generally, where the inspection period PKINT1 starts is really an engineering issue that trades off ease of implementation against how soon after the pulse returns to baseline one wishes to be able to reliably capture a valid baseline values $B_2$ **156.** Thus, for example, PKINT1 could also begin at the upward crossing of the threshold, at the pulse's detected peak, or halfway between the detected upward and downward crossings. The implemented method is both conservative and relatively immune to contamination from pileup events.

4.4. Results with Soft X-Ray Modifications

An example of the improved performance that can be attained using the modifications described in **§4.14.3** is presented in **Fig. 13,** which shows an x-ray spectrum taken from an SEM sample composed of pure boron overlaid with a thin carbon film for conductivity. The spectrum was acquired using a high quality 10 mm$^2$ Si(Li) detector and the circuit shown in **Fig. 11.** The B-K line **158** at 185 eV is well resolved (54.3 eV FWHM) and separated from the low energy noise **159.** It also shows quite good separation from the neighboring C-K line **162,** which is only 97 eV away, at 282 eV. The Bremsstrahlung background **163** slowly rises to the right. In a separate measurement, the C-K peak was found to have an energy resolution of about 58 eV.

4.5. Improving Pileup Detection for Very Low Energy Events

A difficulty arises in implementing the most effective pileup recognition for very soft x-rays or other low energy events when using the baseline filter as the "fast" inspection circuit. Normally we handle pileup inspection using two tests: an interval test, which requires that successive pulses be separated by more than the peaking time of the energy filter, and a MAXWIDTH cut, which requires that the width $t_t$ of the trigger filter at threshold be less than a test value MAXWIDTH. [WARBURTON - 1997] This value is typically set to be about twice the trigger filter's peaking time. In the case of very soft x-rays, this test can fail, as shown in **Fig. 14.** The preamplifier output **170** contains two closely spaced soft x-ray pulses that are processed by the baseline filter to produce the baseline output trace **171,** which appears to be a single peak when the threshold cut T **173** is set as shown. Further, the peak also drops back below threshold before the test period MAXWIDTH **174** has elapsed. Therefore, as far as the baseline trigger circuit is concerned, there is only a single pulse in the preamplifier signal.

We have devised two different solutions for this problem. The first is to make the MAXWIDTH test energy dependent. That is, for a single baseline pulse of energy $E_B$ coming from a filter of peaking time $\tau_p$ and gap $\tau_g$ and crossing a threshold at energy T, the time separation between up and down crossings is given by

$$\Delta t(E_B,T,\tau_p,\tau_g) = 2(E_B - T)\tau_r/E_B + \tau_g. \tag{11}$$

Therefore, in this approach, we adjust MAXWIDTH = $\Delta t(E_B,T,\tau_p,\tau_g) + \delta$ on a pulse-by-pulse basis, where $\delta$ is a small error margin to account for noise fluctuations. In our preferred implementation, where pileup inspection is carried out in real time in gate array logic, we do not compute **Eqn. 11** on a pulse-by-pulse basis. Noting that $\Delta t(E_B,T,\tau p,\tau g) \cong 2\tau_p + \tau_g$ whenever $E_B$ is much larger than T (e.g., > 2000 eV for T = 200 eV), we instead pre-compute a set of MAXWIDTH values for a number of $E_B$ ranges, where this number will typically be small, of order 10. For example, continuing with T = 200 eV, if we divide $E_B$ into a set of contiguous ranges with boundaries at 200, 250, 285, 333, 400, 500, 667, 1000, 2000, and $E_{Bmax}$ eV, then we obtain the evenly spaced sequence of test values:

$$\text{MAXWIDTH} = \{0.2, 0.3, 0.4, 0.5, 0.6, 0.7, 0.8, 0.9, 1.0\}\tau_p + \tau_{g} + \delta. \tag{12}$$

These values are then stored in a small lookup table in the gate array and retrieved on a pulse-by-pulse basis, based on the measured value of $E_B$, for comparison with $t_t$.

Our second solution to the soft x-ray pileup problem is an energy comparison test. **Fig 14** shows the basis of this approach. In **Fig. 14** we have scaled the energy filter by a constant so that its output can be directly compared to that of the baseline filter. Because the energy filter's time constant is much longer, its output **176** does not resolve this pair of pulses at all, thereby summing their energies. Thus the maximum energy $E_B$ **177** found from the baseline filter is only about half that of the scaled maximum energy $E_E$ **178** found from the energy filter. We can therefore use this difference as a sensitive pileup test for very soft x-rays. Whenever we detect a "good" pulse using the baseline filter, we capture a first estimate of its energy $E_B$ **177** from the baseline filter. Since the pulse is "good" we also capture the standard estimate of its energy $E_E$ **178** from the energy filter. We then make the following test:

$$\text{if } (K_{BE} E_E < E_B + \Delta_n), \text{ then } E_E \text{ is good}, \tag{13}$$

at least within the detection capabilities of this test. For our trapezoidal filters, $K_{BE}$ is simply related to the filters' peaking time constant values $L_E$ and $L_B$ defined in conjunction with **Eqn. 4** as

$$K_{BE} = L_B/L_E, \tag{14}$$

and equals 4 in our example case. In the case of more general linear filters, $K_{BE}$ may be derivable or else have to be measured, per the discussion of $K_{BE}$ following **Eqn. 4.** $\Delta_n$ is just an error band which is based on the electronics noise in the two filter circuits (as we are measuring the same x-ray in both cases, the "Fano" noise is identical). Depending upon circumstances, $\Delta_n$ may either be derived analytically or determined experimentally. Typical values fall between 1 and 2 times the noise of the energy filter. Whenever baseline values in the filters are significant, then $E_E$ and $E_B$ should be baseline corrected before applying the test of **Eqn. 10.**

In the preceding method, we compared the maximum values of the corresponding pulses output from the two filters and spoke of these as representing the "energies" of the two pulses. Clearly, from our earlier discussions, other pulse characteristics representative of the energy (e.g. pulse area) could equally well be used in this comparison.

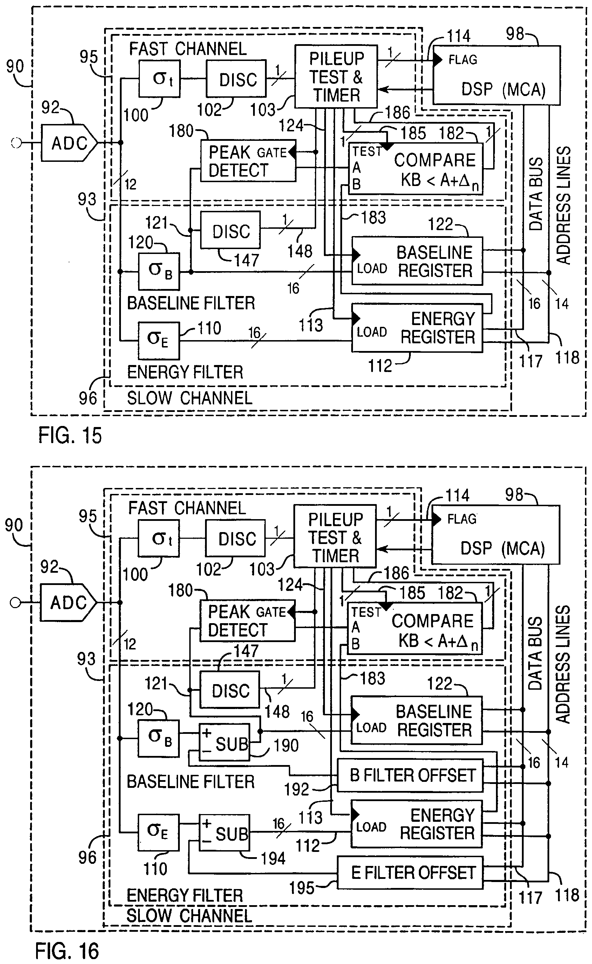

Both of these solutions have been found to work and improve pileup rejection for very soft x-rays. Since the energy solution requires fewer FPGA resources to program, it is usually our preferred solution. **Fig. 15** shows this circuitry added to the spectrometer design of **Fig. 11.** The peak detector **180** is gated by the output of discriminator **147** so it captures the maximum value **177** seen on the output **121** of the baseline filter **120** while it is above the threshold T **173.** It feeds this maximum to input A of the comparator **182,** which takes its B input from energy register **112.** The value in this register is loaded under control of the pileup tester **103** via control line **113** as described above, which then pulses strobe line **185** leading to the test input to the comparator **182** in order to make the comparison. Line **186** returns the TRUE/FALSE result of the comparison to the pileup tester **103.** If the peak passes this test, then the pileup tester can proceed to finish any remaining pileup tests based on intervals between arriving pulses before flagging the DSP **98** that a good pulse has been found.

4.6. Alternative Implementations

In **§2.4** we discussed issues associated with the order in which various operations are implemented. In particular, we mentioned that certain operations could be moved into the digital processing circuit **93.** In **Fig. 16** we show such an implementation that also incorporates the energy comparison test described in **§4.5.** In this implementation, the outputs of both the energy filter **110** and baseline filter **120** are corrected for their respective baseline values on a sample-by-sample basis. Thus the output of the baseline filter **120** is followed by a subtracter **190** that removes a baseline filter offset value stored in a register **192,** which can be loaded from the DSP **98** using the data bus **117** and address lines **118.** In keeping with the discussion of **Eqn. 10,** the value loaded into the B Filter Offset register **192** will typically be the sum of the baseline slope component $B_S$ and the residual baseline component $B_R$ so that the output of subtracter **190** will be nominally zero when baseline filter **120** is at its baseline. Any deviations from zero will be captured by the baseline register **122** as part of normal baseline filter sampling and used by the DSP **98** to update the value of $B_R$. This approach is advantageous because the operation of both the pulse detection discriminator **147** and peak detect and capture **180** now become independent of fluctuations in the baseline output of the baseline filter. In particular, peak values captured by circuit **180** are now true estimates of event energies as seen by the baseline filter and needed for the pileup comparison test given in **Eqn. 13.**

The output of the energy filter **110** is treated similarly, with the value stored in the E Filter Offset register **195** being subtracted once per sample by subtracter **194.** The value stored in E Filter Offset register **195** is updated by the DSP **98** at intervals that depend upon the algorithm implemented. In our standard implementations, it is updated every time we obtain a valid new sample from the baseline filter register **122** and recompute the baseline according to **Eqn. 7.** Since the energy and baseline filter's baseline values are related according to **Eqn. 4,** we can also maximize accuracy in the energy comparison test implemented by comparator **182** by also loading $<b>_i/K_{EB}$ into the B Filter Offset register **192** every time we load $<b>_i$ into the E Filter Offset Register, where $<b>_i$ is from **Eqn. 4** and $K_{EB}$ is from **Eqn. 4.**

5. Analog Implementations

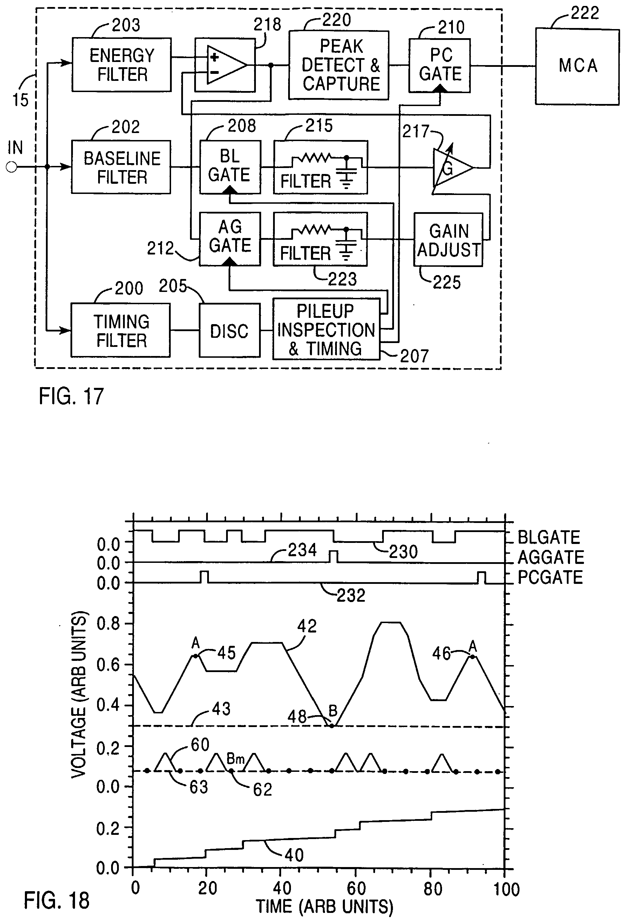

The preferred implementations shown in **Fig. 6, Fig. 11, Fig. 15** and **Fig. 16** are digitally based primarily because our standard commercial digital spectrometers are digitally based. The invention, however, does not require a digital implementation and we show a schematic diagram of an analog spectrometer incorporating the technique in **Fig. 17.** There are no novel components used in this circuit, methods for implementing the various filters, discriminators, gates, etc. in analog circuitry are all well known to those skilled in the art. As in **Fig. 6,** three shaping filters are used: a timing filter **200,** a baseline filter **202,** and an energy filter **203,** which have short, medium and long shaping times respectively (and hence short, medium and long basewidths). The timing filter feeds a discriminator **205,** which signals the pileup inspection and timing circuit **207** each time a pulse is detected in the preamplifier signal. Circuit **207** controls spectrometer operation through three gates: the baseline averaging gate BLGATE **208,** the energy peak capture gate PCGATE **210,** and an optional auto-gain adjust gate AGGATE **212. Fig. 18** shows the signals that control these gates, as added to the signals shown in **Fig. 4.** The gates are open (conducting) when their control signals are high. The BLGATE **208** connects the baseline filter **202** to an averaging filter **215** whenever the baseline signal **60** is at its baseline value **63** and the BLGATE signal **230** is high. The output of averaging filter **215,** which is the average value of the successive baseline filter values connected to it through BLGATE **208,** is adjusted in amplitude by variable gain amplifier **217** and subtracted from the output of energy filter **203** by the subtracting circuit **218.** Peak detect and capture circuit **220** captures peak values from this signal that, if they are not piled up, pass through peak capture gate PCGATE **210** to reach the multichannel analyzer **222.** As may be seen from the PCGATE signal **232** in **Fig. 18,** PCGATE opens briefly only after the good amplitude values A **45** and **46** are captured. As expected, the baseline filter spends a good fraction of its time at a valid baseline value, so the BLGATE signal **230** is also high a similar time fraction.

Since analog signals can show both offsets and drifts, we have included an auto-gain adjustment circuit in the design to test that the amplified output of the baseline filter circuit really does match the baseline of the energy filter. This is done through the sample and hold circuit AGS&H **212** which connects samples of subtracter **218's** output to a long time constant filter **223,** collecting the samples on those occasions when the pileup inspection circuit **207** determines that the energy filter is truly at baseline. As discussed above, and the AGS&H signal **234** in **Fig. 18** shows, these may be relatively rare events B **48** at higher data rates (i.e., "only" hundreds per second). Deviations in the output of filter **223** are then used by gain adjust circuit **225** to modify the gain of variable amplifier **217.** To prevent oscillations, the time constants of the two averaging filters **215** and **223** should differ by an order of magnitude or more. The job of the baseline filter circuit is to cancel noise and pick up fluctuations in the baseline, so its time constant will typically be less than a millisecond, while the gain adjust circuit corrects for slow time drifts and has a time constant more typically on the order of seconds.

## 9. References

The following are incorporated by reference:

KNOLL - 1989: "Radiation Detection and Measurement," 2nd Ed. by Glenn F. Knoll (J. Wiley, New York, 1989), Chapter 4, Section VII, "Dead Time" and Chapter 16, Section III, "Pulse Shaping."

WARBURTON - 1997: U.S. Patent No. 5,684,850, issued Nov. 4, 1997 to W.K. Warburton and B. Hubbard for "Method and apparatus for digitally based high speed x-ray spectrometer."
WARBURTON - 1999A: U.S. Patent No. 5,870,051, issued Feb. 9, 1999 to W.K. Warburton and B Hubbard for "Method and apparatus for Analog Signal Conditioning for High Speed, Digital X-ray Spectrometer."
WARBURTON - 1999B: U.S. Patent No. 5,873,054, issued Feb. 16, 1999 to W.K. Warburton and Z. Zhou for "Method and apparatus for combinatorial logic signal processor in a digitally based high speed x-ray spectrometer."

## 10. Conclusion

In the foregoing description of specific embodiments we showed examples of the general technique of estimating the baseline of a spectrometer's energy filter by sampling the baseline output of a second filter having a significantly shorter basewidth. In considering this teaching, it is important to understand that its novelty does not lie in the inclusion of an additional filter *per se*; spectrometers using additional filters beyond the common fast and slow energy filters are known. Rather its novelty lies in recognizing the possibility of forming an estimate of a first filter's baseline by making baseline measurements on a second filter and realizing that the two filters need not share a common mathematical form.
While our preferred implementations are digital, the invention does not require it and may also be implemented using analog spectroscopy techniques. Further, while we described our invention primarily in the context of radiation spectroscopy using solid state detectors, the underlying methods apply equally well to other spectroscopies, including nuclear and particle spectroscopies, which use the same fundamental filtering techniques.
Therefore, the foregoing description of specific embodiments has been presented for purposes of illustration and description. These embodiments were chosen and described in order to best explain the principles of the invention and its practical application to thereby enable others in the art to best utilize the invention in various embodiments and with such modifications as best suit the invention to the particular uses contemplated.
Our preferred embodiment uses a method according to claim 1 and a device according to claim 25.
In an example, while the preferred embodiments used a DSP to capture and compute baseline averages, this function could have been carried out in the combinatorial logic directly in order to achieve the highest data rates. In a further example, while a particular DSP memory buffer structure was preferred to implement symmetric baseline corrections, it is clear that many other memory structure and address schemes could achieve the same result or that, for example, a dedicated memory outside the DSP could be similarly used. In another example, while we have shown both fully digital and fully analog implementations of the method, it is clear that mixed analog-digital circuits can also be used. For example, in the analog circuit **Fig. 16,** BLGATE **198** could be replaced by a sampling ADC, averaging filter **205** by a digital filter, and variable gain amplifier **207** by a DAC feeding subtracter **208.**
In a penultimate example, while we implemented the symmetric baseline correction of **Fig. 10** in DSP memory, we could also have employed combinatorial logic in a gate array, coupled to an addressable memory. In a final example, while our embodiments only capture shaped pulse peak amplitudes, the same method would work with embodiments that measure other characteristics of the shaped pulse, including its area or a mathematical function fitted to multiple points along the shaped pulse.

**Claims**

1. A method for determining baseline corrections in a spectrometer that measures the energy of events occurring in a detector connected to a preamplifier wherein the preamplifier produces pulses, referred to as event pulses, in response to events, wherein the spectrometer measures the energy of events by,

   using a first linear filter (110), referred to as the energy filter, to transform event pulses (34) into shaped pulses (35, 42), referred to as energy pulses,
   wherein the energy pulses are **characterized by** a first basewidth (39), and
   wherein the energy filter's output signal is **characterized by** a DC offset (38, 48) in the absence of event pulses, the DC offset being referred to as the energy filter's baseline,
   measuring a characteristic of at least some energy pulses to provide estimates of the energies of their associated events, and
   using a baseline correction to compensate the measured characteristics for the energy filter's baseline;
   the method for determining such baseline corrections being **characterized by**:

   using a second linear filter (120), referred to as the baseline filter, to transform event pulses into shaped pulses (60), referred to as baseline pulses that are **characterized by** a second basewidth (63) that is shorter than the first basewidth;
   determining times when the baseline filter is not processing any event pulses;
   capturing baseline values (62) from the baseline filter during such determined times; and
   updating the baseline correction for the energy filter using at least some of the baseline values captured from the baseline filter.

2. The method of claim 1 wherein said measuring a characteristic of a given energy pulse includes capturing an estimate of its peak value (45, 46), its area, or both.

3. The method of claim 1 wherein the energy filter and the baseline filter are both trapezoidal filters.

4. The method of claim 1 wherein times when the baseline filter (120) is at its baseline value (62) are determined by measuring that the baseline filter's output is less than a predetermined threshold value T.

5. The method of claim 1 wherein times when the baseline filter (120) is at its baseline value (62) are determined by detecting the presence of baseline pulses and using a baseline countdown timer (103) to measure the time required for the baseline filter to return to its baseline.

6. The method of claim 1 wherein said updating of the baseline correction includes multiplying the baseline value (62) captured from the baseline filter (120) by a constant to obtain an estimate of the energy filter baseline value.

7. The method of claim 6 wherein:

   the energy (110) and baseline (120) filters have the same mathematical form; and
   the two filters' respective time constants differ by a constant K so that the mean of the baseline filter's baseline and the mean of the energy filter's baseline differ by the same constant K squared.

8. The method of claim 1 wherein:

   the energy (110) and baseline (120) filters are both trapezoidal filters;
   the baseline filter has a peaking time $\tau_{pB}$ and a gap time $\tau_{gB}$;
   the energy filter has a peaking time $\tau_{pE}$ and a gap time $\tau_{gE}$; and
   the baseline values $B_B$ captured from the baseline filter are multiplied by a constant $K_{EB}$ to obtain an estimate BE of the energy filter's baseline value, where

$$K_{EB} = (\tau_{pE}(\tau_{pE}+\tau_{gE}))/(\tau_{pB}(\tau_{pB}+\tau_{gB})).$$

9. The method of claim 1 wherein said updating the baseline correction includes forming an average of multiple baseline values captured from the baseline filter (120).

10. The method of claim 9 wherein the average is the arithmetic average of the N baseline values most recently captured from the baseline filter (120), where N is a constant.

11. The method of claim 9 wherein the i$^{th}$ value $<b>_i$ of the average is computed according to:

$$<b>_i = B_i/N + <b>_{i-1} (N-1)/N,$$

where

$B_i$ is the i$^{th}$ baseline value captured from the baseline filter (120),
$<b>_{i-1}$ is the prior value of the average, and N is a constant.

12. The method of claim 1 wherein;
the baseline filter is a digital filter; and
the intervals between successively captured baseline values are tested to assure that they exceed a minimum allowed interval BASETIME1 to assure that successively captured baseline values do not share overlapping data points.

13. The method of claim 12 wherein the value of the minimum allowed interval BASETIME1 is randomized to destroy time correlations between successively captured baseline values.

14. The method of claim 1 wherein the spectrometer is modified to save the measured characteristic values so that the compensation can be carried out using baseline corrections updated at times after said measured values are captured.

15. The method of claim 14 wherein the spectrometer is a digital spectrometer (90) including digital memory (140);
an address pointer (BC-POINT) (142) to the memory is incremented by unity each time the baseline correction is updated;
each measured characteristic value is saved at a memory location (144) computed by adding a constant $N_{LEAD}$ to the value of the address pointer; and
each time the baseline correction is updated the value of the memory at location BC-POINT is read and,

if the read memory value is zero, nothing is done;
else the compensation is carried out by subtracting the updated baseline correction from the read memory value and writing the value zero to the same memory location.

16. The method of claim 1 wherein the baseline filter is also used to detect the presence of event pulses by comparing (147) the baseline filter's output amplitude (121) to a threshold value T.

17. The method of claim 16 wherein compensation is provided for changes in the value of the baseline filter's own baseline by:

adjusting the threshold value T at various multiple times.

18. The method of claim 16 wherein the baseline filter performs pileup inspection by:

measuring the time separation between detected event pulses; and
preventing said capturing of characteristic values from the energy filter (110) when such time separations are small enough so that the energy filter's corresponding output pulses are piled up.

19. The method of claim 16 wherein
the use of the baseline filter (120) to detect the presence of event pulses is in addition to the spectrometer's use of a conventional fast channel (95) for detecting the presence of event pulses; and
the fast channel comprises at least a filter (100) whose basewidth is at least an order of magnitude shorter than the basewidth of the energy filter and a comparator (102) for comparing the output of the fast channel filter to a threshold value.

**20.** The method of claim 16 wherein the times when the baseline filter (120) is at its baseline value (62) are determined by:

waiting, after each time a baseline pulse is detected in the baseline filter's output and prior to said capturing of a baseline value, for the output to return to a value less than T (152 - Fig. 12); and then
also waiting an inspection interval PKINT1 (153, 157); and
additionally, following said capturing of a baseline value (154, 156),
testing that the baseline filter output does not again exceed said threshold value T during a second inspection interval PKINT2 (155); where
PKINT1 is long enough to assure that the baseline filter (120) has adequate time to return to its baseline value and PKINT2 is long enough to assure that the baseline filter has not departed from its baseline value (156) due to the presence of an as yet undetected event pulse.

**21.** The method of claim 16 wherein a pileup inspection test is made on the baseline filter' output to detect event pulses whose time separations are less than or comparable to the baseline filter's time constant by, each time the baseline filter output exceeds the threshold T (173):

measuring both the time $t_t$ the baseline filter output exceeds the threshold T and the maximum value $E_B$ (177) that it attains during this period;
selecting a test value MAXWIDTH (174) which depends upon the magnitude of $E_B$;
comparing MAXWIDTH to $t_t$; and
rejecting as piled up any events for which $t_t$ exceeds MAXWIDTH.

**22.** The method of claim 21 wherein the test value MAXWIDTH (174) is selected by:

when setting up the spectrometer,

choosing a set of contiguous $E_B$ (177) ranges, and
computing and storing a value of MAXWIDTH for each range; and when operating the spectrometer,
each time a value of $E_B$ is found, determining which $E_B$ range it lies within, and
using the pre-stored value of MAXWIDTH for that $E_B$ range as the selected MAXWIDTH test value.

**23.** The method of claim 16 wherein a pileup inspection test is made on the baseline filter' output to detect event pulses whose time separations are less than or comparable to the baseline filter's time constant by, each time the baseline filter output exceeds the threshold T (173):

measuring a characteristic $E_B$ (177) of the baseline pulse;
scaling the measured energy pulse characteristic $E_E$ (178) by a constant $K_{BE}$;
comparing $K_{BE} E_E$ to $E_B + \Delta_n$, where $\Delta_n$ is a constant; and
when $K_{BE} E_E$ is smaller than $E_B + \Delta_n$, labeling the value $E_E$ as not suffering from pileup, within the detection capabilities of this test.

**24.** The method of claim 23 wherein, prior to scaling the measured characteristic $E_E$ and comparing $K_{BE} E_E$ to $E_B + \Delta_n$, $E_E$ (178) is corrected for the energy filter's baseline value, $E_B$ (177) is corrected for the baseline filter's baseline value, or both.

**25.** Apparatus for determining baseline corrections in a spectrometer that measures the energy of events occurring in a detector connected to a preamplifier, wherein the preamplifier produces pulses, referred to as event pulses, in response to events, wherein the spectrometer comprises,
a first linear filter (110), referred to as the energy filter, that transforms event pulses (34) into shaped pulses (35, 42), referred to as energy pulses;

wherein the energy pulses are **characterized by** a first basewidth (39), and
wherein the energy filter's output signal is **characterized by** a DC offset (38) in the absence of event pulses, the DC offset being referred to as the energy filter's baseline,

means for measuring a characteristic of at least some energy pulses to provide estimates of the energies of their associated events, and

means, using a baseline correction, for compensating said measured characteristics for the energy filter's baseline; the apparatus for determining such baseline corrections being **characterized by**:

a second linear filter (120), referred to as the baseline filter, that transforms event pulses into shaped pulses (60), referred to as baseline pulses that are **characterized by** a second basewidth (63) that is shorter than the first basewidth;

means for determining times when the baseline is not processing any event pulses;

means for capturing baseline values (62) from said baseline filter during such determined times; and

means for updating the baseline correction using at least some of said baseline values captured from the baseline filter.

26. The apparatus of claim 25 wherein said means for measuring a characteristic of a given energy pulse includes means for capturing an estimate of its peak value (45, 46), its area, or both.

27. The apparatus of claim 25 wherein the energy filter (110) and the baseline filter (120) are both trapezoidal filters.

28. The apparatus of claim 25 wherein said means for determining times when said baseline filter (120) is at its baseline value (62) includes comparison means for determining when the baseline filter's output is less than a predetermined threshold value T.

29. The apparatus of claim 25 wherein said means for determining times when said baseline filter (120) is at its baseline value (62) comprises:

a baseline countdown timer; and

means for detecting the presence of said baseline pulses and triggering said countdown timer to measure the time required for the baseline filter to return to baseline.

30. The apparatus of claim 25 wherein:

both said energy filter (110) and said baseline filter (120) are linear filters; and

said means for updating said baseline correction includes means for multiplying said captured baseline values by a constant to obtain an estimate of said baseline correction.

31. The apparatus of claim 30 wherein:

said energy (110) and baseline filters (120) have the same mathematical form; and

the two filters' respective time constants differ by a constant K so that the mean of the baseline filter's baseline and the mean of the energy filter's baseline differ by the same constant K squared.

32. The apparatus of claim 25 wherein the means for updating the baseline correction includes means for forming an average of multiple baseline values captured from the baseline filter (120).

33. The apparatus of claim 25 wherein
said baseline filter is a digital filter; and
said baseline value capturing means includes means for testing the intervals between successively captured baseline values to assure that they exceed a minimum allowed interval BASETIME1 to assure that successively captured baseline values do not share overlapping data points.

34. The apparatus of claim 25 wherein;
the spectrometer further includes means for saving said measured characteristic values; and
means for compensating a given characteristic using baseline corrections updated at times after said given characteristic was measured.

35. The apparatus of claim 34 wherein said spectrometer is a digital spectrometer (90) including:

a digital memory (140);

an address pointer (BC-POINT) (142) to the memory that is incremented by unity each time the baseline correction is updated;

means for saving each measured characteristic value at a memory location (144) computed by adding a constant $N_{LEAD}$ to the value of the address pointer; and

means for reading the value of the memory at location BC-POINT each time said baseline correction is updated and,

> if said read memory value is zero, doing nothing;
> else carrying out said compensation by subtracting said updated baseline correction from said read memory value and writing the value zero to the same memory location.

36. The apparatus of claim 25, and further comprising means to also allow the baseline filter (120) to be used to detect the presence of event pulses by comparing (147) the baseline filter's output amplitude (121) to a threshold value T.

37. The apparatus of claim 36, and further comprising means to compensate for changes in the value of the baseline filter's own baseline by:

> adjusting said threshold value T at various multiple times.

38. The apparatus of claim 36, and further comprising means for implementing pileup inspection by using the baseline filter to measure the time separation between detected event pulses and preventing said capturing of characteristic values from the energy filter when such time separations are small enough so that the energy filter's corresponding output pulses are piled up.

39. The apparatus of claim 36 wherein the means for determining times when the baseline filter is at its baseline value comprises:

> means, following said use of the baseline filter to detect a pulse and prior to said capturing of a baseline value, for:

>> first waiting for the baseline filter's output to return to a value less than T (152); and
>> then also waiting an inspection interval PKINT1 (153, 157); and
>> means, following the capture of each baseline filter baseline value (154, 156), to test that the baseline filter output does not again exceed said threshold value T during a second inspection interval PKINT2 (155); where PKINT1 is long enough to assure that the baseline filter has adequate time to return to its baseline value and PKINT2 is long enough to assure that the baseline filter has not departed from baseline value (156) due to the presence of an as yet undetected event pulse.

40. The apparatus of claim 36, and further comprising means for making a pileup inspection test on the baseline filter's output to detect event pulses whose time separations are less than or comparable to the baseline filter's time constant, said means including means for, each time the baseline filter output exceeds the threshold T (173):

> measuring both the time $t_t$ said baseline filter output exceeds said threshold T and the maximum value $E_B$ (144) that it attains during this period;
> selecting a test value MAXWIDTH (174) which depends upon the magnitude of $E_B$;
> comparing MAXWIDTH to $t_t$; and
> labeling as piled up, any events for which $t_t$ exceeds MAXWIDTH.

41. The apparatus of claim 36, and further comprising means for making a pileup inspection test on the baseline filter's output to detect event pulses whose time separations are less than or comparable to the baseline filter's time constant, said means including means for, each time the baseline filter output exceeds the threshold T (143):

> measuring a characteristic $E_B$ (177) of the baseline pulse;
> scaling said measured energy pulse characteristic $E_E$ (178) by a constant $K_{BE}$;
> comparing $K_{BE} E_E$ to $E_B + \Delta_n$, where $\Delta_n$ is a constant; and
> when $K_{BE} E_E$ is smaller than $E_B + \Delta_n$, labeling the captured value $E_E$ as not suffering from pileup, within the detection capabilities of this test.

42. The apparatus of claim 41, and further comprising means, invoked prior to the operation of said scaling and comparing means, for correcting either $E_B$ (177) for the baseline filter's baseline value, for correcting $E_E$ (178) for the energy filter's baseline value, or both.

**Patentansprüche**

1. Verfahren zur Bestimmung von Grundlinienkorrekturen in einem Spektrometer, das die Energie von Ereignissen misst, die in einem Detektor stattfinden, der mit einem Vorverstärker verbunden ist, wobei der Vorverstärker Impulse, die als Ereignisimpulse bezeichnet werden, ansprechend auf Ereignisse erzeugt, wobei das Spektrometer die Energie von Ereignissen misst, durch

   Verwenden eines ersten linearen Filters (110), der als Energiefilter bezeichnet wird, um Ereignisimpulse (34) in geformte Impulse (35, 42), die als Energieimpulse bezeichnet werden, umzuwandeln,
   wobei die Energieimpulse durch eine erste Basisbreite (39) gekennzeichnet sind, und
   wobei das Ausgangssignal des Energiefilters durch einen Gleichspannungsoffset (38, 48) in Abwesenheit von Ereignisimpulsen gekennzeichnet ist, wobei der Gleichspannungsoffset als Grundlinie des Energiefilters bezeichnet wird,
   Messen einer Charakteristik wenigstens einiger Energieimpulse zur Bereitstellung von Schätzungen der Energien ihrer zugehörigen Ereignisse, und
   Verwenden einer Grundlinienkorrektur, um die gemessenen Charakteristiken für die Grundlinie des Energiefilters zu kompensieren;
   wobei das Verfahren zur Bestimmung derartiger Grundlinienkorrekturen durch Folgendes gekennzeichnet ist:

   Verwenden eines zweiten linearen Filters (120), der als Grundlinienfilter bezeichnet wird, um Ereignisimpulse in geformte Impulse (60), die als Grundlinienimpulse bezeichnet werden, die durch eine zweite Basisbreite (63) gekennzeichnet sind, die kürzer als die erste Basisbreite ist, umzuwandeln;
   Bestimmen von Zeiten, wenn der Grundlinienfilter keine Ereignisimpulse verarbeitet;
   Erfassen von Grundlinienwerten (62) aus dem Grundlinienfilter während derartiger bestimmter Zeiten; und
   Aktualisieren der Grundlinienkorrektur für den Energiefilter unter Verwendung wenigstens einiger der Grundlinienwerte, die aus dem Grundlinienfilter erfasst werden.

2. Verfahren nach Anspruch 1, wobei das Messen einer Charakteristik eines gegebenen Energieimpulses ein Erfassen einer Schätzung seines Spitzenwerts (45, 46), seiner Fläche, oder von beidem, einschließt.

3. Verfahren nach Anspruch 1, wobei sowohl der Energiefilter als auch der Grundlinienfilter Trapezfilter sind.

4. Verfahren nach Anspruch 1, wobei Zeiten, wenn der Grundlinienfilter (120) an seinem Grundlinienwert (62) ist, durch Messen bestimmt werden, dass die Ausgabe des Grundlinienfilters geringer als ein vorgegebener Schwellwert T ist.

5. Verfahren nach Anspruch 1, wobei Zeiten, wenn der Grundlinienfilter (120) an seinem Grundlinienwert (62) ist, durch Erfassen des Vorhandenseins von Grundlinienimpulsen und Verwenden eines Grundlinien-Countdown-Timers (103), um die Zeit zu messen, die erforderlich ist, dass der Grundlinienfilter zu seiner Grundlinie zurückkehrt, bestimmt werden.

6. Verfahren nach Anspruch 1, wobei das Aktualisieren der Grundlinienkorrektur ein Multiplizieren des Grundlinienwerts (62), der aus dem Grundlinienfilter (120) erfasst wird, mit einer Konstante einschließt, um eine Schätzung des Grundlinienwerts des Energiefilters zu erhalten.

7. Verfahren nach Anspruch 6, wobei:

   der Energie- (110) und der Grundlinienfilter (120) dieselbe mathematische Form aufweisen; und
   sich die jeweiligen Zeitkonstanten der beiden Filter durch eine Konstante K unterscheiden, so dass sich das Mittel der Grundlinie des Grundlinienfilters und das Mittel der Grundlinie des Energiefilters um dieselbe Konstante K zum Quadrat unterscheiden.

8. Verfahren nach Anspruch 1, wobei:

   sowohl der Energie- (110) als auch der Grundlinienfilter (120) Trapezfilter sind;
   der Grundlinienfilter eine Spitzenzeit $\tau_{pB}$ und eine Lückenzeit $\tau_{gB}$ aufweist;

der Energiefilter eine Spitzenzeit $\tau_{pE}$ und eine Lückenzeit $\tau_{gE}$ aufweist; und
die Grundlinienwerte $B_B$, die aus dem Grundlinienfilter erfasst werden, mit einer Konstante $K_{EB}$ multipliziert werden, um eine Schätzung $B_E$ des Grundlinienwerts des Energiefilters zu erhalten, wobei

$$K_{EB} = (\tau_{pE}(\tau_{pE}+\tau_{gE}))/(\tau_{pB}(\tau_{pB}+\tau_{gB})).$$

9. Verfahren nach Anspruch 1, wobei das Aktualisieren der Grundlinienkorrektur das Bilden eines Durchschnitts mehrerer Grundlinienwerte einschließt, die aus dem Grundlinienfilter (120) erfasst werden.

10. Verfahren nach Anspruch 9, wobei der Durchschnitt der arithmetische Durchschnitt der N Grundlinienwerte ist, die zuletzt aus dem Grundlinienfilter (120) erfasst wurden, wobei N eine Konstante ist.

11. Verfahren nach Anspruch 9, wobei der $i^{th}$-Wert $<b>_i$ des Durchschnitts wie folgt berechnet wird:

$$<b>_i = B_i/N + <b>_{i-1} (N-1)/N,$$

wobei

$B_i$ der $i^{th}$ Grundlinienwert ist, der aus dem Grundlinienfilter (120) erfasst wird,
$<b>_{i-1}$ der vorherige Wert des Durchschnitts ist, und N eine Konstante ist.

12. Verfahren nach Anspruch 1, wobei:

der Grundlinienfilter ein digitaler Filter ist; und
die Intervalle zwischen aufeinanderfolgend erfassten Grundlinienwerten getestet werden, um sicherzustellen, dass sie ein minimal zulässiges Intervall BASETIME1 überschreiten, um sicherzustellen, dass aufeinanderfolgend erfasste Grundlinienwerte keine überlappenden Datenpunkte teilen.

13. Verfahren nach Anspruch 12, wobei der Wert des minimal zulässigen Intervalls BASETIME1 randomisiert ist, um zeitliche Korrelationen zwischen aufeinanderfolgend erfassten Grundlinienwerten zu vernichten.

14. Verfahren nach Anspruch 1, wobei das Spektrometer modifiziert ist, um die gemessenen Charakteristikwerte zu speichern, so dass die Kompensation unter Verwendung von Grundlinienkorrekturen erfolgen kann, die gelegentlich aktualisiert werden, nachdem die gemessenen Werte erfasst werden.

15. Verfahren nach Anspruch 14, wobei das Spektrometer ein digitales Spektrometer (90) ist, das einen digitalen Speicher (140) einschließt;
wobei ein Adresshinweis (BC-POINT) (142) für den Speicher jedes Mal um eine Einheit anwächst, wenn die Grundlinienkorrektur aktualisiert wird;
jeder gemessene Charakteristikwert an einem Speicherort (144) gespeichert wird, der durch Hinzufügen einer Konstanten $N_{LEAD}$ zu dem Wert des Adresshinweises berechnet wird; und
jedes Mal, wenn die Grundlinienkorrektur aktualisiert wird, der Wert des Speichers am Ort BC-POINT abgelesen wird, und

wenn der abgelesene Speicherwert null beträgt, nichts getan wird;
ansonsten die Kompensation durch Subtrahieren der aktualisierten Grundlinienkorrektur von dem abgelesenen Speicherwert und Schreiben des Werts null in denselben Speicherort durchgeführt wird.

16. Verfahren nach Anspruch 1, wobei der Grundlinienfilter auch dazu verwendet wird, das Vorhandensein von Ereignisimpulsen durch Vergleichen (147) der Ausgangsamplitude (121) des Grundlinienfilters mit einem Schwellwert T zu erfassen.

17. Verfahren nach Anspruch 16, wobei eine Kompensation von Änderungen des Werts der eigenen Grundlinie des Grundlinienfilters durch Folgendes bereitgestellt ist:

Anpassen des Schwellwerts T zu verschiedenen mehreren Zeitpunkten.

18. Verfahren nach Anspruch 16, wobei der Grundlinienfilter eine Anhäufungsprüfung durch Folgendes durchführt:

Messen der Zeittrennung zwischen erfassten Ereignisimpulsen; und
Verhindern des Erfassens der Charakteristikwerte aus dem Energiefilter (110), wenn derartige Zeittrennungen klein genug sind, so dass die entsprechenden Ausgangsimpulse des Energiefilters angehäuft werden.

19. Verfahren nach Anspruch 16, wobei
die Verwendung des Grundlinienfilters (120) zur Erfassung des Vorhandenseins von Ereignisimpulsen zusätzlich zur Verwendung eines herkömmlichen schnellen Kanals (95) durch das Spektrometer zur Erfassung des Vorhandenseins von Ereignisimpulsen stattfindet; und
der schnelle Kanal wenigstens einen Filter (100) aufweist, dessen Basisbreite wenigstens eine Größenordnung kürzer als die Basisbreite des Energiefilters ist, und eine Vergleichsvorrichtung (102) zum Vergleichen der Ausgabe des Filters des schnellen Kanals mit einem Schwellwert.

20. Verfahren nach Anspruch 16, wobei die Zeiten, wenn der Grundlinienfilter (120) an seinem Grundlinienwert (62) ist, durch Folgendes bestimmt werden:

Warten, nach jeder Erfassung eines Grundlinienimpulses in der Ausgabe des Grundlinienfilters und vor der Erfassung eines Grundlinienwerts, darauf, dass die Ausgabe zu einem Wert zurückkehrt, der geringer als T (152 - Fig. 12) ist; und anschließend
auch Abwarten eines Prüfungsintervalls PKINT1 (153, 157); und
zusätzlich Verfolgen der Erfassung eines Grundlinienwerts (154, 156), Testen, dass die Ausgabe des Grundlinienfilters nicht erneut den Schwellwert T überschreitet, während eines zweiten Prüfungsintervalls PKINT2 (155); wobei
PKINT1 lange genug ist, um sicherzustellen, dass der Grundlinienfilter (120) ausreichend Zeit hat, um zu seinem Grundlinienwert zurückzukehren, und PKINT2 lange genug ist, um sicherzustellen, dass der Grundlinienfilter nicht von seinem Grundlinienwert (156) aufgrund des Vorhandenseins eines bis dahin unerfassten Ereignisimpulses abgewichen ist.

21. Verfahren nach Anspruch 16, wobei ein Anhäufungsprüfungstest an der Ausgabe des Grundlinienfilters durchgeführt wird, um Ereignisimpulse zu erfassen, deren Zeittrennungen geringer als oder vergleichbar mit der Zeitkonstante des Grundlinienfilters sind, jedes Mal, wenn die Ausgabe des Grundlinienfilters die Schwelle T (173) überschreitet, durch:

Messen sowohl der Zeit $t_t$, die die Ausgabe des Grundlinienfilters die Schwelle T überschreitet, als auch des maximalen Werts $E_B$ (177), der während dieses Zeitraums angenommen wird;
Auswählen eines Testwerts MAXWIDTH (174), der von der Größe von $E_B$ abhängt;
Vergleichen von MAXWIDTH mit $t_t$; und
Ablehnen als Anhäufung aller Ereignisse, für welche $t_t$ MAXWIDTH überschreitet.

22. Verfahren nach Anspruch 21, wobei der Testwert MAXWIDTH (174) durch Folgendes ausgewählt wird;
wenn das Spektrometer eingerichtet wird,

Auswählen eines Satzes von benachbarten Bereichen $E_B$ (177), und Berechnen und Speichern eines Werts MAXWIDTH für jeden Bereich; und jedes Mal, wenn ein Wert $E_B$ gefunden wird, Bestimmen, in welchem $E_B$-Bereich er liegt, und
Verwenden des vorab gespeicherten Werts MAXWIDTH für diesen $E_B$-Bereich als ausgewählten MAXWIDTH-Testbereich.

23. Verfahren nach Anspruch 16, wobei ein Anhäufungsprüfungstest an der Ausgabe des Grundlinienfilters durchgeführt wird, um Ereignisimpulse zu erfassen, deren Zeittrennungen geringer als oder vergleichbar mit der Zeitkonstante des Grundlinienfilters sind, jedes Mal, wenn die Ausgabe des Grundlinienfilters die Schwelle T (173) überschreitet, durch:

Messen einer Charakteristik $E_B$ (177) des Grundlinienimpulses;
Skalieren der gemessenen Energieimpulscharakteristik $E_E$ (178) durch eine Konstante $K_{BE}$;

Vergleichen von $K_{BE} E_E$ mit $E_B + \Delta_n$, wobei $\Delta_n$ eine Konstante ist; und
wenn $K_{BE} E_E$ kleiner als $E_B + \Delta_n$ ist, Kennzeichnen des Werts $E_E$ als nicht von einer Anhäufung betroffen, innerhalb der Erfassungsfähigkeiten dieses Tests.

24. Verfahren nach Anspruch 23, wobei, vor dem Skalieren der gemessenen Charakteristik $E_E$ und Vergleichen von $K_{BE} E_E$ mit $E_B + \Delta_n$, $E_E$ (178) nach dem Grundlinienwert des Energiefilters korrigiert wird, $E_B$ (177) nach dem Grundlinienwert des Grundlinienfilters korrigiert wird, oder beides.

25. Vorrichtung zur Bestimmung von Grundlinienkorrekturen in einem Spektrometer, das die Energie von Ereignissen misst, die in einem Detektor stattfinden, der mit einem Vorverstärker verbunden ist, wobei der Vorverstärker Impulse, die als Ereignisimpulse bezeichnet werden, ansprechend auf Ereignisse erzeugt, wobei das Spektrometer Folgendes aufweist:

einen ersten linearen Filter (110), der als Energiefilter bezeichnet wird und der Ereignisimpulse (34) in geformte Impulse (35, 42), die als Energieimpulse bezeichnet werden, umwandelt,
wobei die Energieimpulse durch eine erste Basisbreite (39) gekennzeichnet sind, und
wobei das Ausgangssignal des Energiefilters durch einen Gleichspannungsoffset (38) in Abwesenheit von Ereignisimpulsen gekennzeichnet ist, wobei der Gleichspannungsoffset als Grundlinie des Energiefilters bezeichnet wird,
Mittel zum Messen einer Charakteristik wenigstens einiger Energieimpulse zur Bereitstellung von Schätzungen der Energien ihrer zugehörigen Ereignisse, und
Mittel, das eine Grundlinienkorrektur verwendet, zum Kompensieren der gemessenen Charakteristiken für die Grundlinie des Energiefilters;
wobei die Vorrichtung zur Bestimmung derartiger Grundlinienkorrekturen durch Folgendes gekennzeichnet ist:

einen zweiten linearen Filter (120), der als Grundlinienfilter bezeichnet wird und der Ereignisimpulse in geformte Impulse (60), die als Grundlinienimpulse bezeichnet werden, die durch eine zweite Basisbreite (63) gekennzeichnet sind, die kürzer als die erste Basisbreite ist, umwandelt;
Mittel zum Bestimmen von Zeiten, wenn die Grundlinie keine Ereignisimpulse verarbeitet;
Mittel zum Erfassen von Grundlinienwerten (62) aus dem Grundlinienfilter während derartiger bestimmter Zeiten; und
Mittel zum Aktualisieren der Grundlinienkorrektur unter Verwendung wenigstens einiger der Grundlinienwerte, die aus dem Grundlinienfilter erfasst werden.

26. Vorrichtung nach Anspruch 25, wobei das Mittel zum Messen einer Charakteristik eines gegebenen Energieimpulses ein Mittel zum Erfassen einer Schätzung seines Spitzenwerts (45, 46), seiner Fläche, oder von beidem, einschließt.

27. Vorrichtung nach Anspruch 25, wobei sowohl der Energiefilter (110) als auch der Grundlinienfilter (120) Trapezfilter sind.

28. Vorrichtung nach Anspruch 25, wobei das Mittel zum Bestimmen von Zeiten, wenn der Grundlinienfilter (120) an seinem Grundlinienwert (62) ist, ein Vergleichsmittel zum Bestimmen einschließt, wenn die Ausgabe des Grundlinienfilters geringer als ein vorgegebener Schwellwert T ist.

29. Vorrichtung nach Anspruch 25, wobei das Mittel zum Bestimmen von Zeiten, wenn der Grundlinienfilter (120) an seinem Grundlinienwert (62) ist, Folgendes aufweist:

einen Grundlinien-Countdown-Timer; und
ein Mittel zum Erfassen des Vorhandenseins der Grundlinienimpulse und zum Auslösen, dass der Countdown-Timer die Zeit misst, die erforderlich ist, dass der Grundlinienfilter zu seiner Grundlinie zurückkehrt.

30. Vorrichtung nach Anspruch 25, wobei:

sowohl der Energiefilter (110) als auch der Grundlinienfilter (120) lineare Filter sind; und
das Mittel zum Aktualisieren der Grundlinienkorrektur ein Mittel zum Multiplizieren der erfassten Grundlinienwerte mit einer Konstanten einschließt, um eine Schätzung der Grundlinienkorrektur zu erhalten.

31. Vorrichtung nach Anspruch 30, wobei:

der Energie- (110) und der Grundlinienfilter (120) dieselbe mathematische Form aufweisen; und
sich die jeweiligen Zeitkonstanten der beiden Filter durch eine Konstante K unterscheiden, so dass sich das Mittel der Grundlinie des Grundlinienfilters und das Mittel der Grundlinie des Energiefilters um dieselbe Konstante K zum Quadrat unterscheiden.

**32.** Vorrichtung nach Anspruch 25, wobei das Mittel zum Aktualisieren der Grundlinienkorrektur ein Mittel zum Bilden eines Durchschnitts mehrerer Grundlinienwerte einschließt, die aus dem Grundlinienfilter (120) erfasst werden.

**33.** Vorrichtung nach Anspruch 25, wobei
der Grundlinienfilter ein digitaler Filter ist; und
das Grundlinienwert-Erfassungsmittel ein Mittel zum Testen der Intervalle zwischen aufeinanderfolgend erfassten Grundlinienwerten einschließt, um sicherzustellen, dass sie ein minimal zulässiges Intervall BASETIME1 überschreiten, um sicherzustellen, dass aufeinanderfolgend erfasste Grundlinienwerte keine überlappenden Datenpunkte teilen.

**34.** Vorrichtung nach Anspruch 25, wobei:

das Spektrometer ferner Mittel zum Speichern der gemessenen Charakteristikwerte einschließt; und
Mittel zum Kompensieren einer gegebenen Charakteristik unter Verwendung von Grundlinienkorrekturen, die gelegentlich aktualisiert werden, nachdem die gegebene Charakteristik gemessen wurde.

**35.** Vorrichtung nach Anspruch 34, wobei das Spektrometer ein digitales Spektrometer (90) ist, das Folgendes einschließt:

einen digitalen Speicher (140);
einen Adresshinweis (BC-POINT) (142) für den Speicher, der jedes Mal um eine Einheit anwächst, wenn die Grundlinienkorrektur aktualisiert wird;
ein Mittel zum Speichern eines jeden gemessenen Charakteristikwerts an einem Speicherort (144), der durch Hinzufügen einer Konstanten $N_{LEAD}$ zu dem Wert des Adresshinweises berechnet wird; und
ein Mittel zum Ablesen des Werts des Speichers am Ort BC-POINT jedes Mal, wenn die Grundlinienkorrektur aktualisiert wird, und

wenn der abgelesene Speicherwert null beträgt, nichts getan wird;
ansonsten die Kompensation durch Subtrahieren der aktualisierten Grundlinienkorrektur von dem abgelesenen Speicherwert und Schreiben des Werts null in denselben Speicherort durchgeführt wird.

**36.** Vorrichtung nach Anspruch 25, die ferner ein Mittel aufweist, das es dem Grundlinienfilter (120) auch ermöglicht, dazu verwendet zu werden, das Vorhandensein von Ereignisimpulsen durch Vergleichen (147) der Ausgangsamplitude (121) des Grundlinienfilters mit einem Schwellwert T zu erfassen.

**37.** Vorrichtung nach Anspruch 36, die ferner ein Mittel zur Kompensation von Änderungen des Werts der eigenen Grundlinie des Grundlinienfilters durch Folgendes aufweist:

Anpassen des Schwellwerts T zu verschiedenen mehreren Zeitpunkten.

**38.** Vorrichtung nach Anspruch 36, die ferner ein Mittel zum Umsetzen einer Anhäufungsprüfung durch Verwenden des Grundlinienfilters zum Messen der Zeittrennung zwischen erfassten Ereignisimpulsen und Verhindern des Erfassens der Charakteristikwerte aus dem Energiefilter aufweist, wenn derartige Zeittrennungen klein genug sind, so dass die entsprechenden Ausgangsimpulse des Energiefilters angehäuft werden.

**39.** Vorrichtung nach Anspruch 36, wobei das Mittel zur Bestimmung von Zeiten, wenn der Grundlinienfilter an seinem Grundlinienwert ist, Folgendes aufweist:

ein Mittel, nach der Verwendung des Grundlinienfilters zur Erfassung eines Impulses und vor der Erfassung eines Grundlinienwerts, zum:

ersten Warten darauf, dass die Ausgabe des Grundlinienfilters zu einem Wert zurückkehrt, der geringer als T (152) ist; und

anschließend auch Abwarten eines Prüfungsintervalls PKINT1 (153, 157); und

ein Mittel, nach der Erfassung eines jeden Grundlinienwerts (154, 156) des Grundlinienfilters, zum Testen, dass die Ausgabe des Grundlinienfilters nicht erneut den Schwellwert T überschreitet, während eines zweiten Prüfungsintervalls PKINT2 (155); wobei

PKINT1 lange genug ist, um sicherzustellen, dass der Grundlinienfilter ausreichend Zeit hat, um zu seinem Grundlinienwert zurückzukehren, und PKINT2 lange genug ist, um sicherzustellen, dass der Grundlinienfilter nicht von seinem Grundlinienwert (156) aufgrund des Vorhandenseins eines bis dahin unerfassten Ereignisimpulses abgewichen ist.

**40.** Vorrichtung nach Anspruch 36, die ferner ein Mittel zur Durchführung eines Anhäufungsprüfungstests an der Ausgabe des Grundlinienfilters aufweist, um Ereignisimpulse zu erfassen, deren Zeittrennungen geringer als oder vergleichbar mit der Zeitkonstante des Grundlinienfilters sind, wobei das Mittel ein Mittel für Folgendes einschließt, jedes Mal, wenn die Ausgabe des Grundlinienfilters die Schwelle T (173) überschreitet:

Messen sowohl der Zeit $t_t$, die die Ausgabe des Grundlinienfilters die Schwelle T überschreitet, als auch des maximalen Werts $E_B$ (144), der während dieses Zeitraums angenommen wird;
Auswählen eines Testwerts MAXWIDTH (174), der von der Größe von $E_B$ abhängt;
Vergleichen von MAXWIDTH mit $t_t$; und
Kennzeichnen als Anhäufung aller Ereignisse, für welche $t_t$ MAXWIDTH überschreitet.

**41.** Vorrichtung nach Anspruch 36, die ferner ein Mittel zur Durchführung eines Anhäufungsprüfungstests an der Ausgabe des Grundlinienfilters aufweist, um Ereignisimpulse zu erfassen, deren Zeittrennungen geringer als oder vergleichbar mit der Zeitkonstante des Grundlinienfilters sind, wobei das Mittel ein Mittel für Folgendes einschließt, jedes Mal, wenn die Ausgabe des Grundlinienfilters die Schwelle T (143) überschreitet:

Messen einer Charakteristik Eg (177) des Grundlinienimpulses;
Skalieren der gemessenen Energieimpulscharakteristik $E_E$ (178) durch eine Konstante $K_{BE}$;
Vergleichen von $K_{BE} E_E$ mit $E_B + \Delta_n$, wobei $\Delta_n$ eine Konstante ist; und
wenn $K_{BE} E_E$ kleiner als $E_B + \Delta_n$ ist, Kennzeichnen des erfassten Werts $E_E$ als nicht von einer Anhäufung betroffen, innerhalb der Erfassungsfähigkeiten dieses Tests.

**42.** Vorrichtung nach Anspruch 41, die ferner ein Mittel, abgerufen vor dem Vorgang des Skalier- und Vergleichmittels, zum Korrigieren von entweder $E_B$ (177) nach dem Grundlinienwert des Grundlinienfilters, zum Korrigieren von $E_E$ (178) nach dem Grundlinienwert des Energiefilters, oder von beiden, aufweist.

## Revendications

**1.** Procédé de détermination de corrections de ligne de base dans un spectromètre qui mesure l'énergie d'événements se produisant dans un détecteur connecté à un préamplificateur, dans lequel le préamplificateur produit des impulsions, appelées « impulsions d'événements », en réponse à des événements, dans lequel le spectromètre mesure l'énergie d'événements :

en utilisant un premier filtre linéaire (110), appelé le « filtre d'énergie », en vue de transformer des impulsions d'événements (34) en des impulsions mises en forme (35, 42), appelées « impulsions d'énergie » ;
dans lequel les impulsions d'énergie sont **caractérisées par** une première largeur de base (39) ; et
dans lequel le signal de sortie du filtre d'énergie est **caractérisé par** un décalage DC (38, 48) en l'absence d'impulsions d'événements, le décalage DC étant appelé la « ligne de base du filtre d'énergie » ;
en mesurant une caractéristique d'au moins certaines impulsions d'énergie en vue de fournir des estimations des énergies de leurs événements associés ; et
en utilisant une correction de ligne de base pour compenser les caractéristiques mesurées pour la ligne de base du filtre d'énergie ;
le procédé de détermination de telles corrections de ligne de base étant **caractérisé par** les étapes ci-dessous consistant à :

utiliser un second filtre linéaire (120), appelé le « filtre de ligne de base », en vue de transformer des impulsions d'événements en des impulsions mises en forme (60), appelées « impulsions de ligne de base », qui sont **caractérisées par** une seconde largeur de base (63) qui est plus courte que la première largeur de base ;
déterminer des instants où le filtre de ligne de base ne traite pas d'impulsions d'événements ;
capturer des valeurs de ligne de base (62) à partir du filtre de ligne de base au cours de tels instants déterminés ; et
mettre à jour la correction de ligne de base pour le filtre d'énergie, en utilisant au moins certaines des valeurs de ligne de base capturées à partir du filtre de ligne de base.

2. Procédé selon la revendication 1, dans lequel ladite étape de mesure d'une caractéristique d'une impulsion d'énergie donnée consiste à capturer une estimation de sa valeur de crête (45, 46), de sa superficie, ou les deux.

3. Procédé selon la revendication 1, dans lequel le filtre d'énergie et le filtre de ligne de base correspondent à des filtres trapézoïdaux.

4. Procédé selon la revendication 1, dans lequel des instants où le filtre de ligne de base (120) est à sa valeur de ligne de base (62) sont déterminés en mesurant que la sortie du filtre de ligne de base est inférieure à une valeur de seuil prédéterminée T.

5. Procédé selon la revendication 1, dans lequel des instants où le filtre de ligne de base (120) est à sa valeur de ligne de base (62) sont déterminés en détectant la présence d'impulsions de ligne de base et en utilisant un temporisateur de compte à rebours de ligne de base (103) en vue de mesurer le temps nécessaire au filtre de ligne de base pour revenir à sa ligne de base.

6. Procédé selon la revendication 1, dans lequel ladite étape de mise à jour de la correction de ligne de base comporte l'étape consistant à multiplier la valeur de ligne de base (62) capturée à partir du filtre de ligne de base (120) par une constante, en vue d'obtenir une estimation de la valeur de ligne de base de filtre d'énergie.

7. Procédé selon la revendication 6, dans lequel :

les filtres d'énergie (110) et de ligne de base (120) ont la même forme mathématique ; et
les constantes de temps respectives des deux filtres se distinguent par une constante K, de sorte que la moyenne de la ligne de base du filtre d'énergie et la moyenne de la ligne de base du filtre de ligne de base se distinguent par la même constante K élevée au carré.

8. Procédé selon la revendication 1, dans lequel :

les filtres d'énergie (110) et de ligne de base (120) sont des filtres trapézoïdaux ;
le filtre de ligne de base présente un instant de crête $\tau_p B$ et un instant d'écart $\tau_g B$ ;
le filtre d'énergie présente un instant de crête $\tau_p E$ et un instant d'écart $\tau_g E$ ; et
les valeurs de ligne de base $B_B$ capturées à partir du filtre de ligne de base sont multipliées par une constante $K_{EB}$ en vue d'obtenir une estimation $B_E$ de la valeur de ligne de base du filtre d'énergie, où

$$K_{EB} = (\tau_p E(\tau_p E + \tau_g E)) / (\tau_p B(\tau_p B + t_g B)).$$

9. Procédé selon la revendication 1, dans lequel ladite étape de mise à jour de la correction de ligne de base comprend l'étape consistant à former une moyenne de multiples valeurs de ligne de base capturées à partir du filtre de ligne de base (120).

10. Procédé selon la revendication 9, dans lequel la moyenne est la moyenne arithmétique des N valeurs de ligne de base capturées le plus récemment à partir du filtre de ligne de base (120), dans lequel N est une constante.

11. Procédé selon la revendication 9, dans lequel l'$i^{\text{ième}}$ valeur $<b>_i$ de la moyenne est calculée selon la formule ci-dessous :

$$<b>_i = B_i/N + <b>_{i-1} (N-1)/N,$$

où

$B_i$ est la $i^{\text{ième}}$ valeur de ligne de base capturée à partir du filtre de ligne de base (120) ;
$<b>_{i-1}$ est la valeur précédente de la moyenne, et N est une constante.

**12.** Procédé selon la revendication 1, dans lequel :

le filtre de ligne de base est un filtre numérique ; et
les intervalles entre des valeurs de ligne de base capturées de manière successive sont testés pour s'assurer qu'ils dépassent un intervalle autorisé minimum « BASETIME1 » afin de garantir que des valeurs de ligne de base capturées de manière successive ne partagent pas de points de données en chevauchement.

**13.** Procédé selon la revendication 12, dans lequel la valeur de l'intervalle autorisé minimum « BASETIME 1 » est randomisée en vue de détruire des corrélations temporelles entre des valeurs de ligne de base capturées de manière successive.

**14.** Procédé selon la revendication 1, dans lequel le spectromètre est modifié pour enregistrer les valeurs de caractéristiques mesurées de sorte que la compensation peut être mise en oeuvre en utilisant des corrections de ligne de base mises à jour à des instants postérieurs à la capture desdites valeurs mesurées.

**15.** Procédé selon la revendication 14, dans lequel le spectromètre est un spectromètre numérique (90) incluant une mémoire numérique (140) ;
un pointeur d'adresse (BC-POINT) (142) au niveau de la mémoire est incrémenté d'une unité à chaque mise à jour de la correction de ligne de base ;
chaque valeur de caractéristique mesurée est enregistrée au niveau d'un emplacement de mémoire (144) calculé en ajoutant une constante $N_{LEAD}$ à la valeur du pointeur d'adresse ; et
à chaque mise à jour de la correction de ligne de base, la valeur de la mémoire à l'emplacement « BC-POINT » est lue ; et
si la valeur de mémoire lue est égale à zéro, aucune mesure n'est mise en oeuvre ;
sinon, la compensation est mise en oeuvre en soustrayant la correction de ligne de base mise à jour de la valeur de mémoire lue, et en écrivant la valeur « zéro » dans le même emplacement de mémoire.

**16.** Procédé selon la revendication 1, dans lequel le filtre de ligne de base est également utilisé en vue de détecter la présence d'impulsions d'événements en comparant (147) l'amplitude de sortie du filtre de ligne de base (121) à une valeur de seuil T.

**17.** Procédé selon la revendication 16, dans lequel une compensation est prévue pour des variations de la valeur de la propre ligne de base du filtre de ligne de base par :

un ajustement de la valeur de seuil T à divers instants multiples.

**18.** Procédé selon la revendication 16, dans lequel le filtre de ligne de base met en oeuvre une inspection d'empilement :

en mesurant la séparation temporelle entre des impulsions d'événements détectées ; et
en empêchant ladite capture de valeurs de caractéristiques à partir du filtre d'énergie (110) lorsque de telles séparations temporelles sont suffisamment petites pour que les impulsions de sortie correspondantes du filtre d'énergie soient empilées.

**19.** Procédé selon la revendication 16, dans lequel l'utilisation du filtre de ligne de base (120) pour détecter la présence d'impulsions d'événements s'ajoute à l'utilisation du spectromètre d'un canal rapide conventionnel (95) pour détecter la présence d'impulsions d'événements ; et
le canal rapide comprend au moins un filtre (100), dont la largeur de base est au moins d'un ordre de grandeur plus courte que la largeur de base du filtre d'énergie, et un comparateur (102) destiné à comparer la sortie du filtre de canal rapide à une valeur de seuil.

**20.** Procédé selon la revendication 16, dans lequel les instants où le filtre de ligne de base (120) est à sa valeur de ligne de base (62) sont déterminés :

en attendant, après chaque instant où une impulsion de ligne de base est détectée dans la sortie du filtre de ligne de base, et avant ladite capture d'une valeur de ligne de base, que la sortie revienne à une valeur inférieure à la valeur de seuil T (152 - figure 12) ; et ensuite

en attendant également un intervalle d'inspection « PKINT1 » (153, 157) ; et

en outre, suite à ladite étape de capture d'une valeur de ligne de base (154, 156),

en testant que la sortie de filtre de ligne de base ne dépasse pas à nouveau ladite valeur de seuil T au cours d'un second intervalle d'inspection « PKINT2 » (155) ; où

l'intervalle d'inspection « PKINT1 » est suffisamment long pour garantir que le filtre de ligne de base (120) a suffisamment de temps pour revenir à sa valeur de ligne de base, et l'intervalle d'inspection « PKINT2 » est suffisamment long pour garantir que le filtre de ligne de base ne s'est pas écarté de sa valeur de ligne de base (156) en raison de la présence d'une impulsion d'événement encore non détectée.

21. Procédé selon la revendication 16, dans lequel un test d'inspection d'empilement est réalisé sur la sortie du filtre de ligne de base en vue de détecter des impulsions d'événements dont les séparations temporelles sont inférieures ou comparables à la constante de temps du filtre de ligne de base, à chaque fois que la sortie de filtre de ligne de base dépasse la valeur de seuil T (173) :

en mesurant à la fois l'instant $t_t$ où la sortie de filtre de ligne de base dépasse la valeur de seuil T et la valeur maximale $E_B$ (177) qu'elle atteint au cours de cette période ;

en sélectionnant une valeur de test « MAXWIDTH » (174) qui dépend de la grandeur de la valeur maximale $E_B$ ;

en comparant la valeur « MAXWIDTH » à l'instant $t_t$ ; et

en rejetant comme des événements « empilés » tous les événements pour lesquels l'instant $t_t$ dépasse la valeur « MAXWIDTH ».

22. Procédé selon la revendication 21, dans lequel la valeur de test « MAXWIDTH » (174) est sélectionnée :

lors de la configuration du spectromètre :

en choisissant un ensemble de plages $E_B$ (177) contigües ; et

en calculant et en stockant une valeur de « MAXWIDTH » pour chaque plage ; et

lors de l'exploitation du spectromètre :

à chaque fois qu'une valeur de $E_B$ est trouvée, en déterminant dans quelle plage $E_B$ elle se situe ; et

en utilisant la valeur préstockée de « MAXWIDTH » pour cette plage $E_B$ en tant que la valeur de test « MAXWIDTH » sélectionnée.

23. Procédé selon la revendication 16, dans lequel un test d'inspection d'empilement est réalisé sur la sortie du filtre de ligne de base en vue de détecter des impulsions d'événements dont les séparations temporelles sont inférieures ou comparables à la constante de temps du filtre de ligne de base, à chaque fois que la sortie de filtre de ligne de base dépasse la valeur de seuil T (173) :

en mesurant une caractéristique $E_B$ (177) de l'impulsion de ligne de base ;

en mettant à l'échelle la caractéristique d'impulsion d'énergie mesurée $E_E$ (178) par une constante $K_{BE}$ ;

en comparant $K_{BE} E_E$ à $E_B + \Delta_n$, dans lequel $\Delta_n$ est une constante ; et

lorsque $K_{BE} E_E$ est inférieure à $E_B + \Delta_n$, en étiquetant la valeur $E_E$ comme ne subissant pas d'empilement, dans les capacités de détection de ce test.

24. Procédé selon la revendication 23, dans lequel, avant la mise à l'échelle de la caractéristique mesurée $E_E$ et avant la comparaison de $K_{BE} E_E$ à $E_B + \Delta_n$, la caractéristique $E_E$ (178) est corrigée en ce qui concerne la valeur de ligne de base du filtre d'énergie, la caractéristique $E_B$ (177) est corrigée en ce qui concerne la valeur de ligne de base du filtre de ligne de base, ou les deux.

25. Appareil permettant de déterminer des corrections de ligne de base dans un spectromètre qui mesure l'énergie d'événements se produisant dans un détecteur connecté à un préamplificateur, dans lequel le préamplificateur produit des impulsions, appelées « impulsions d'événements », en réponse à des événements, dans lequel le spectromètre comporte :

un premier filtre linéaire (110), appelé le « filtre d'énergie », qui transforme des impulsions d'événements (34) en des impulsions mises en forme (35, 42), appelées « impulsions d'énergie » ;

dans lequel les impulsions d'énergie sont **caractérisées par** une première largeur de base (39) ; et

dans lequel le signal de sortie du filtre d'énergie est **caractérisé par** un décalage DC (38) en l'absence d'impulsions d'événements, le décalage DC étant appelé la « ligne de base du filtre d'énergie » ;

un moyen pour mesurer une caractéristique d'au moins certaines impulsions d'énergie en vue de fournir des estimations des énergies de leurs événements associés ; et

un moyen pour, en utilisant une correction de ligne de base, compenser lesdites caractéristiques mesurées pour la ligne de base du filtre d'énergie ;

l'appareil destiné à déterminer de telles corrections de ligne de base étant **caractérisé par** :

un second filtre linéaire (120), appelé le « filtre de ligne de base », qui transforme des impulsions d'événements en des impulsions mises en forme (60), appelées « impulsions de ligne de base », qui sont **caractérisées par** une seconde largeur de base (63) qui est plus courte que la première largeur de base ;

un moyen pour déterminer des instants où le filtre de ligne de base ne traite pas d'impulsions d'événements ;

un moyen pour capturer des valeurs de ligne de base (62) à partir du filtre de ligne de base au cours de tels instants déterminés ; et

un moyen pour mettre à jour la correction de ligne de base, en utilisant au moins certaines des valeurs de ligne de base capturées à partir du filtre de ligne de base.

26. Appareil selon la revendication 25, dans lequel ledit moyen pour mesurer une caractéristique d'une impulsion d'énergie donnée inclut un moyen pour capturer une estimation de sa valeur de crête (45, 46), de sa superficie, ou les deux.

27. Appareil selon la revendication 25, dans lequel le filtre d'énergie (110) et le filtre de ligne de base (120) correspondent à des filtres trapézoïdaux.

28. Appareil selon la revendication 25, dans lequel ledit moyen pour déterminer des instants où ledit filtre de ligne de base (120) est à sa valeur de ligne de base (62) inclut un moyen de comparaison pour déterminer le moment où la sortie du filtre de ligne de base est inférieure à une valeur de seuil prédéterminée T.

29. Appareil selon la revendication 25, dans lequel ledit moyen pour déterminer des instants où ledit filtre de ligne de base (120) est à sa valeur de ligne de base (62) comprend :

un temporisateur de compte à rebours de ligne de base ; et

un moyen pour détecter la présence desdites impulsions de ligne de base et déclencher ledit temporisateur de compte à rebours en vue de mesurer le temps nécessaire au filtre de ligne de base pour revenir à la ligne de base.

30. Appareil selon la revendication 25, dans lequel :

ledit filtre d'énergie (110) et ledit filtre de ligne de base (120) sont des filtres linéaires ; et

ledit moyen pour mettre à jour ladite correction de ligne de base inclut un moyen pour multiplier lesdites valeurs de ligne de base capturées, par une constante, en vue d'obtenir une estimation de ladite correction de ligne de base.

31. Appareil selon la revendication 30, dans lequel :

les filtres d'énergie (110) et de ligne de base (120) ont la même forme mathématique ; et

les constantes de temps respectives des deux filtres se distinguent par une constante K, de sorte que la moyenne de la ligne de base du filtre d'énergie et la moyenne de la ligne de base du filtre de ligne de base se distinguent par la même constante K élevée au carré.

32. Appareil selon la revendication 25, dans lequel le moyen pour mettre à jour la correction de ligne de base comprend un moyen pour former une moyenne de plusieurs valeurs de ligne de base capturées à partir du filtre de ligne de base (120).

33. Appareil selon la revendication 25, dans lequel

ledit filtre de ligne de base est un filtre numérique ; et

ledit moyen de capture de valeurs de ligne de base inclut un moyen pour tester les intervalles entre des valeurs de ligne de base capturées de manière successive pour s'assurer qu'ils dépassent un intervalle autorisé minimum « BASETIME1 » afin de garantir que des valeurs de ligne de base capturées de manière successive ne partagent pas de points de données en chevauchement.

**34.** Appareil selon la revendication 25, dans lequel :

le spectromètre inclut en outre un moyen pour enregistrer lesdites valeurs de caractéristiques mesurées ; et un moyen pour compenser une caractéristique donnée en utilisant des corrections de ligne de base mises à jour à des instants ultérieurs à la mesure de ladite caractéristique donnée.

**35.** Appareil selon la revendication 34, dans lequel ledit spectromètre est un spectromètre numérique (90) incluant :

une mémoire numérique (140) ;
un pointeur d'adresse (BC-POINT) (142) au niveau de la mémoire qui est incrémenté d'une unité à chaque mise à jour de la correction de ligne de base ;
un moyen pour enregistrer chaque valeur de caractéristique mesurée au niveau d'un emplacement de mémoire (144) calculé en ajoutant une constante $N_{LEAD}$ à la valeur du pointeur d'adresse ; et
un moyen pour lire la valeur de la mémoire à l'emplacement « BC-POINT » à chaque mise à jour de la correction de ligne de base ; et
si la valeur de mémoire lue est égale à zéro, aucune mesure n'est mise en oeuvre ;
sinon, mettre en oeuvre ladite compensation en soustrayant ladite correction de ligne de base mise à jour de la valeur de mémoire lue, et écrire la valeur « zéro » dans le même emplacement de mémoire.

**36.** Appareil selon la revendication 25, comportant en outre un moyen pour permettre également au filtre de ligne de base (120) d'être utilisé en vue de détecter la présence d'impulsions d'événements en comparant (147) l'amplitude de sortie du filtre de ligne de base (121) à une valeur de seuil T.

**37.** Appareil selon la revendication 36, comprenant en outre un moyen pour compenser des variations de la valeur de la propre ligne de base du filtre de ligne de base par :

un ajustement de la valeur de seuil T à divers instants multiples.

**38.** Appareil selon la revendication 36, comportant en outre un moyen pour mettre en oeuvre une inspection d'empilement en utilisant le filtre de ligne de base pour mesurer la séparation temporelle entre des impulsions d'événements détectées, et pour empêcher ladite capture de valeurs de caractéristiques à partir du filtre d'énergie lorsque de telles séparations temporelles sont suffisamment petites pour que les impulsions de sortie correspondantes du filtre d'énergie soient empilées.

**39.** Appareil selon la revendication 36, dans lequel le moyen pour déterminer des instants où le filtre de ligne de base est à sa valeur de ligne de base comporte :

un moyen, suite à ladite utilisation du filtre de ligne de base pour détecter une impulsion et avant ladite capture d'une valeur de ligne de base, pour :

attendre tout d'abord que la sortie du filtre de ligne de base revienne à une valeur inférieure à la valeur de seuil T (152) ; et
ensuite, attendre également un intervalle d'inspection « PKINT1 » (153, 157) ; et
un moyen, suite à la capture de chaque valeur de ligne de base de filtre de ligne de base (154, 156), pour tester que la sortie de filtre de ligne de base ne dépasse pas à nouveau ladite valeur de seuil T au cours d'un second intervalle d'inspection « PKINT2 » (155) ; où
l'intervalle d'inspection « PKINT1 » est suffisamment long pour garantir que le filtre de ligne de base a suffisamment de temps pour revenir à sa valeur de ligne de base, et l'intervalle d'inspection « PKINT2 » est suffisamment long pour garantir que le filtre de ligne de base ne s'est pas écarté de sa valeur de ligne de base (156) en raison de la présence d'une impulsion d'événement encore non détectée.

**40.** Appareil selon la revendication 36, comportant en outre un moyen pour réaliser un test d'inspection d'empilement sur la sortie du filtre de ligne de base en vue de détecter des impulsions d'événements dont les séparations temporelles sont inférieures ou comparables à la constante de temps du filtre de ligne de base, ledit moyen incluant un moyen pour, à chaque fois que la sortie de filtre de ligne de base dépasse la valeur de seuil T (173) :

mesurer à la fois l'instant $t_t$ où la sortie de filtre de ligne de base dépasse la valeur de seuil T et la valeur maximale $E_B$ (144) qu'elle atteint au cours de cette période ;
sélectionner une valeur de test « MAXWIDTH » (174) qui dépend de la grandeur de la valeur maximale $E_B$ ;
comparer la valeur « MAXWIDTH » à l'instant $t_t$ ; et
étiqueter, en tant que des événements « empilés », tous les événements pour lesquels l'instant $t_t$ dépasse la valeur « MAXWIDTH ».

41. Appareil selon la revendication 36, comportant en outre un moyen pour réaliser un test d'inspection d'empilement sur la sortie du filtre de ligne de base en vue de détecter des impulsions d'événements dont les séparations temporelles sont inférieures ou comparables à la constante de temps du filtre de ligne de base, ledit moyen incluant un moyen pour, à chaque fois que la sortie de filtre de ligne de base dépasse la valeur de seuil T (173) :

mesurer une caractéristique $E_B$ (177) de l'impulsion de ligne de base ;
mettre à l'échelle ladite caractéristique d'impulsion d'énergie mesurée $E_E$ (178) par une constante $K_{BE}$ ;
comparer $K_{BE} E_E$ à $E_B + \Delta_n$, dans lequel $\Delta_n$ est une constante ; et
lorsque $K_{BE} E_E$ est inférieure à $E_B + \Delta_n$, étiqueter la valeur $E_E$ capturée comme ne subissant pas d'empilement, dans les capacités de détection de ce test.

42. Appareil selon la revendication 41, comportant en outre un moyen, qui est appelé avant l'opération dudit moyen de mise à l'échelle et dudit moyen de comparaison, pour corriger soit la caractéristique $E_B$ (177) en ce qui concerne la valeur de ligne de base du filtre de ligne de base, pour corriger la caractéristique $E_E$ (178) en ce qui concerne la valeur de ligne de base du filtre d'énergie, ou les deux.

FIG. 1
(PRIOR ART)

FIG. 2A
(PRIOR ART)

FIG. 2B
(PRIOR ART)

FIG. 3 (PRIOR ART)

FIG. 4

FIG. 6

FIG. 7

FIG. 5

$$B = L(L+G) \, S \, \Delta T$$

FIG. 9

FIG. 10

ADD.   AMPLITUDE

| | |
|---|---|
| 0 | 0 |
| 1 | AMPLITUDE |
| 2 | 0 |
| 3 | 0 |
| 4 | 0 |
| 5 | 0 |
| 6 | AMPLITUDE |
| 7 | 0 |
| 8 | 0 |
| 9 | 0 |
| 10 | 0 |
| 11 | 0 |
| 12 | 0 |
| 13 | (AMPLITUDE) |
| 14 | 0 |
| 15 | 0 |
| 16 | 0 |
| 17 | 0 |
| 18 | 0 |

BASELINE
COUNTER
POINTER
BC-POINT

AMPLITUDE
INSERTION
POINTER
AI-POINT

FIG. 8

FIG.11

FIG.12

FIG.13

FIG. 14

FIG. 15

FIG. 16

FIG. 17

FIG. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5684850 A
- US 5870051 A
- US 5873054 A, Warburton
- WO 9958999 A
- WO 0117103 A
- US 5225682 B
- US 6181177 B

**Non-patent literature cited in the description**

- Pulse Shaping
- **KNOLL.** Dead Time. 1989
- **KNOLL.** Radiation Detection and Measurement. J. Wiley, 1989
- Dead Time